# EUROPEAN PATENT APPLICATION

(11) **EP 0 662 665 A2**
(43) Date of publication of application: **12.07.1995**
(21) Application number: 95100091.8
(22) Date of filing: 04.01.1995
(51) Int. Cl.: G06F 17/60

(54) **Wireless banking terminal using cellular telephone communication**

(30) Priority: 05.01.1994 US 177548
(71) Applicant: TRANSACTION TECHNOLOGY, INC., Santa Monica, CA 90405 (US)
(72) Inventor: Kawan, Joseph Charles, Hollywood, California 90068 (US)
(74) Representative: Ebbinghaus, Dieter, Dipl.-Ing.

(57) **Abstract**

The present invention relates to a programmable microcomputer, microprocessor device or home terminal/modem combination with associated memory and telephone circuitry designed to be operated in most circumstances through a standard telephone 12-key keypad input. The device can have the overall appearance of a telephone. The primary microprocessor can consist of a central processing unit and associated memory and include enhanced integrity features. The device delivers data processing capabilities and services through one or more cellular telephone communication channels.

## Description

This application is a continuation-in-part of Application Serial No. 08/104,931 filed August 12, 1993 which is a continuation of Application Serial No. 07/439,739 filed November 21, 1989 (now abandoned) which is a CIP of two applications: Application Serial No. 07/190,440 filed May 5, 1988 (now U.S. Patent no, 4,991,199) and Application Serial No. 07/260,832 filed October 21, 1988 (now U.S. Patent no. 5,008,927).

### Field of the Invention

This invention relates to a remote wireless terminal designed for use in connection with a distributed data processing system. More particularly, this invention relates to a remote wireless terminal intended for use by a bank customer to allow the customer access to the bank's database and operating software, as well as to access other remote data bases and the like.

### Background and Summary of the Invention

This invention is directed to encouraging potential customers for electronically-managed services such as backing to carry out banking functions using terminals at remote locations.

It will be appreciated that in recent years banking customers have increasingly become accustomed to using automatic teller machine devices (ATMs). These have been relatively successful because they provide a simple and clear "menu" of choices to the consumer at each step of each transaction, such that the customer is very readily led through the sequence of inputs required by the system to respond to the customer's request. It would be desirable if such functions could also be carried out by the consumer at remote locations (i.e. at locations other than the bank or the ATM machines), thus rendering the service more convenient and more likely to be commonly used.

Developments in communications technology in the past decade have made it possible for consumers to access information stored on large computer systems through microcomputers. It is well known that a home computer system can be used to communicate through standard telephone lines with large computer data bases storing such information as stock market statistics, airline flight schedules, and other useful consumer information.

One way to allow users to remotely access banking and other financial services is by providing access via a personal computer. To date, substantially all PC's have been configured to comprise a keyboard of between 60 and 101 keys, a display device, and a housing containing the circuit boards of the computer including various interfaces to other devices such as modems for communication, printers and the like. Such PC's, while increasingly popular, still intimidate many potential users. In the field of banking terminals, this problem has been addressed in copending U. S. patent application, Serial no. 08/104,931 filed on August 12, 1993, which is incorporated by reference herein.

Various firms, including AT&T and Sears, Roebuck & Co., have provided home banking services employing remote computer terminals which communicate with bank service computers. These have either involved "dumb terminals", i.e., terminal devices having very little or no processing capability, or conventional PC's. Nether system is fully user-friendly, as desired, since both require some computer literacy on the part of the user.

U.S. Patent no. 5,008,927 to Weiss et. al. (the '927 patent), incorporated by reference herein, discloses generally a telephone-resembling device which performs computer functions as well as conventional telephone functions, while presenting a user-friendly appearance.

The microprocessor/telephone communication device disclosed in U.S. patents 5,008,927 and 4,991,199 and in application Serial No. 380,557 filed July 17, 1989 to Inatomi, all of which are hereby incorporated by reference herein, provides a means for bringing technologically based services into the typical consumer's home despite consumer resistance to complex products. This breakthrough is accomplished by providing what is in reality a computer terminal resembling the familiar desktop telephone.

However, the prior art only discloses connecting the user's remote terminal, whether a telephone-like device or a conventional personal computer, to a standard telephone line via an RJ-11 telephone jack. This can be inconvenient for users who would like access to banking services via a remote terminal without having to connect with a telephone line. This problem is addressed somewhat in the prior art by various schemes to provide terminals using wireless communication for financial transactions.

Gutman et al. (U.S. Patent No. 5,221,838) discloses a wireless terminal which can be used to transmit and receive data to/from a financial institution. The wireless terminal can be used to update account balances as well as perform various types of transactions.

Kramer (U.S. Patent No. 5,038,284) discloses a system for processing transactions between opposing traders which employs a plurality of portable transaction stations. The portable transaction stations can perform such tasks as time stamping of transactions, calculation of profit/loss, and average cost. Kramer discloses using a radio frequency transceiver for communication.

Maeser et al. (U.S. Patent No. 5,060,152) discloses a portable computer terminal device which can be used to transmit/receive "transaction data" to/from a central unit.

However, all of the above described wireless schemes require that both the remote terminal and the receiving terminal be equipped with wireless receivers and transmitters. For large scale computerized financial systems already connected to the telephone system, adding wireless transceivers in order to facilitate communication with wireless remote terminals could be costly and/or impractical. It is desirable, therefore, to provide a wireless remote terminal without having to modify the computerized financial system or systems to which the wireless terminal is to communicate.

According to the present invention, a system for conducting financial transactions using an ATM network of the type connected to at least one financial institution that maintains an account for a specific user includes a central computer, at least one remote data terminal including user input means and an alpha-numeric display, the data terminal being coupled to a cellular telephone communication channel, the remote data terminal including means for generating first data representing a payee, second data representing an amount, and third data representing an ATM network compatible personal identification number, telecommunication means including a modem operatively coupled to the remote data terminal, the telecommunications means for communicating the first, second and third data from the remote data terminal to said central computer via the dial-up telephone line, the central computer further including means for generating a digital message responsive to the communicated first, second and third data and for applying the digital message including the ATM network compatible personal identification number to the ATM network so as to selectively effect debiting of the user account substantially in real-time response to user manipulation of the remote terminal input keys.

According further to the present invention, the terminal can include an alpha-numeric display device capable of displaying a maximum of N lines of text, N being an integer; and a plurality of keys manipulable by the user, for selecting one of the N display lines. The central computer can connect to the cellular telephone communication channel via a packet data network that frames messages in packets of predetermined length. The central computer can include means for generating display data specifying the display content of all of the lines of the display. The system can include encryption means for encrypting at least the third data and/or the personal identification number.

The system can be configured such that the central computer generates a data packet comprising digital data representing display and prompt information and transmits the generated packet to the terminal via the cellular telephone communication channel. The terminal of the system can further include a help key and a cancel key and the central computer can include means for providing help information for display on the terminal display in response to user depression of the help key wherein the central computer ignores the last keystroke provided by the user in response to depression of the cancel key. The terminal can further include alpha-numeric keypad means for facilitating input by the user of the second data screen navigation keys for requesting recall of information previously displayed by the terminal.

According further to the present invention, the remote data terminal can include a home terminal for connecting to the cellular telephone communication channel, the terminal providing voice and data communications capabilities, the terminal including a housing, a digital controller disposed within the housing, the user input means being coupled to the digital controller for inputting the personal identification number, encrypting means coupled to the digital controller and disposed within the housing for encrypting the inputted personal identification number to provide ATM network compatible encrypted personal identification data wherein the alpha-numeric display is electrically coupled to the digital controller and disposed on the housing, and the display panel is capable of simultaneously displaying a plurality N of discrete lines of information, a plurality of user-manipulable controls, coupled to the controller and disposed on the housing, the controls for selection of menu options displayed on the display information lines, a telephone handset for permitting voice communications over the cellular telephone communication channel wherein the modem is disposed within the housing and coupled to the controller, and the modem is adapted to communicate data between the controller and the central computer via the cellular telephone communication channel, the modem for transmitting the ATM network compatible encrypted personal identification data from the terminal to the central computer via the cellular telephone communication channel, and for communicating information bidirectionally with the central computer in a packet data network format to efficiently provide a high degree of on line interactivity between the central computer and a user viewing the display and operating the controls. The system can include means for periodically transmitting a random number over the cellular telephone communication channel and can include a power supply means for providing power to at least the controller. The controller can include memory buffer means for receiving and temporarily storing signals representing user input and for supplying the stored signals to the modem for transmission over the cellular telephone communication channel. The terminal can further include navigational keys for requesting display of previous and subsequent screens in a predetermined sequence of screens. The system can include means for interfacing with a non-volatile memory element so as to permit credits to be downloaded to the terminal and stored by the memory element.

According further to the present invention, a method of distributing financial services remotely, includes the steps of providing a plurality of remote home banking terminals to a corresponding plurality of users, receiving bill paying requests including user-supplied ATM network compatible personal identification information from the plurality of terminals over cellular telephone communication channels, and processing the bill paying requests substantially in real-time at a central computer operatively coupled to the cellular telephone communication channels, the processing step including generating POS or other ATM interchange-compatible debit messages including the ATM network compatible personal identification information responsive to information transmitted by users from the remote home banking terminals to the central computer over the cellular telephone communication channels, transmitting the debit messages over an ATM network substantially in real-time response to user bill paying requests, debiting the users' bank accounts substantially in real-time in response to the debit message, and paying entities selected by the users via the remote home banking terminals with funds obtained by debiting the users' bank accounts. The bill paying requests receiving step can include the step of receiving a user-inputted Personal identification number that is encrypted.

According further to the present invention, a method of paying bills includes the steps of activating a microprocessor-based home banking terminal coupled to a cellular telephone communication channel, causing and controlling the home banking terminal to establish communications with a central computer over the cellular telephone communication channel, inputting a PIN user identification number, manipulating the terminal to select a payee, manipulating the terminal to select an amount to pay the payee, encrypting the PIN user identification number at the home banking terminal to provide an ATM network compatible encrypted PIN user identification number, transmitting data representing the ATM network compatible encrypted PIN user identification number and the amount from the home banking terminal to the central computer, generating, substantially in real-time at the central computer in response to the transmitted data, an ATM network transaction debit message encoding at least the ATM network compatible encrypted PIN and the amount, transmitting the ATM network transaction debit message from the central computer to the user's bank substantially in real-time over an ATM network, validating and processing the ATM network transaction debit message substantially in real-time, controlling, with the central computer, a means for paying the selected payee the selected amount, and transferring funds in the amount specified by the ATM network transaction debit message from the user's bank to the operator associated with the central computer.

According further to the present invention, the home banking terminal can include an alphanumeric multiline display, and the manipulating steps each include the step of prompting for inputs by displaying information on the alphanumeric multiline display. The home banking terminal can include plural user-depressible controls, and the inputting step can include the step of inputting the PIN user identification number by depressing the controls. The encrypting step can include encrypting the PIN user identification number.

According further to the present invention, a method of providing home banking services includes the steps of communicating, via one or more cellular telephone communication channels, with the home banking terminals on demand using a central computer, receiving financial service requests from the home banking terminals via the cellular telephone communication channels, the receiving step including receiving at least an ATM network compatible encrypted user PIN, an amount, and a payee selection, processing the received financial service requests with the central computer, including the steps of generating and communicating messages from the central computer to users' banks over an ATM network resulting in debiting of user's bank accounts electronically substantially in real-time response to receipt of user bill paying requests, including the step of generating a digital ATM network transaction message containing at least the ATM network compatible encrypted user PIN and the amount and applying the message to the ATM network, disbursing payments electronically with the central computer to payees selected by the users. The method can further include the step of separately communicating the payee selection to the users' banks. The disbursing step can include the step of electronically disbursing the payments by communicating data across a network of electronic lockboxes. The method can further include encrypting user PIN data within the home banking terminals.

According further to the present invention, a method of distributing financial services remotely, includes the steps of providing home banking terminals to users, communicating, via cellular telephone communication channels, with the home banking terminals on demand using a central computer, receiving via the cellular telephone communication channels financial service requests including encrypted PIN information with the central computer from the home banking terminals, processing the received financial service requests with the central computer substantially in real-time including generating an ATM debit request substantially in real-time response to receipt of the financial service requests.

According further to the present invention, a method of paying bills includes the steps of activating a microprocessor-based home banking terminal coupled to a cellular telephone communication channel, causing and controlling the home banking terminal to establish communications with a central computer over the cellular telephone communication channel, inputting a PIN user identification number, manipulating the terminal to select a payee, manipulating the terminal to select an amount to pay the payee, encrypting the PIN within the home banking terminal to provide an ATM network compatible encrypted PIN, transmitting data representing the ATM network compatible encrypted PIN user identification number, the selected payee, and the amount from the home banking terminal to the central computer via the cellular telephone communication channel, storing a plurality of recurring payment dates, parsing the stored payment dates and determining which of the stored payment dates, if any, correspond to the current date, if stored payment data corresponds to the current date, generating, substantially in real-time at the central computer in response to the stored data, an ATM debit message specifying at least the ATM network compatible encrypted PIN, the bank account selection, and the amount, and transmitting the ATM network transaction debit message from the central computer to the user's bank substantially in real-time over a standard ATM network to effect a real-time debit of the user's bank account.

According to the present invention, a method of delivering at least one electronic service to multiple users at least in port via cellular telephone communication channels and home terminals, includes the steps of receiving, from a home terminal over the cellular telephone communication channels, an electronic service request and ATM network compatible personal identification information associated with a user, generating an ATM network debit request message encoding the received ATM network compatible personal identification information, applying the ATM debit request message including the ATM network compatible personal identification information to an ATM network to effect a real-time debiting of funds from an account associated with the user substantially in real-time response to receipt of the electronic service request from the user, and repeating the above steps for multiple users. The method can further include the step of providing extensive bidirectional interaction between the home terminal and a remote computer substantially in real-time via the cellular telephone communication channels so as to provide real-time online interactivity with the user. The receiving step can include receiving a request for home banking services from the user, receiving a request for electronic bill payment from the user, receiving a request for home banking services from the user, or receiving a request for electronic bill payment from the user. The method according to the invention can further include supplying, to each of the multiple users, the home terminal having a display. The method can further include the steps of encrypting the personal identification number, and transmitting the encrypted personal identification number over the cellular telephone communication channels for receipt by a remote computer in the receiving step.

The above-described systems allow a user to have access to banking and financial services via a remote terminal without the need to connect to an RJ11 or other type of standard wired telephone connection. Furthermore, since the remote terminal takes advantage of cellular telephone technology, and since cellular telephone technology interfaces with the standard telephone system, then the remote terminals can be used in conjunction with large scale computerized financial systems that interface with the standard wired telephone system without having to add new communications capability to the large scale computerized financial systems.

### Brief Description of the Drawings

The invention will be better understood if reference is made to the accompanying drawings, in which:
Figure 1 shows a overall view of the terminal according to the invention in a distributed data processing system.
Figure 2 shows in block diagram form the principal components of the system of the invention.
Figure 3 shows a diagram of the message format employed according to the invention.
Figure 4 shows a detail of a status field of the message according to the invention.
Figure 5 shows a connect message according to the invention.
Figure 6 shows a connect response massage according to the invention.
Figure 7 shows a transaction message text format according to the invention.
Figure 8 shows a page downloading message text format employed according to the invention.
Figure 9 shows a page update request message according to the invention.
Figure 10 shows a response to the page update request message of Figure 9.
Figure 11 is a front perspective of the housing for the invention.
Figure 12 is a rear perspective view of the housing for the invention.
Figures 13 and 14 are front and rear perspective views of an alternative embodiment of the invention including function keys.
Figures 15 and 16 are a side and plan view of the access drawer for the 52-key keyboard.
Figure 17 is a depiction in a block diagram format of the functional Components of the microprocessor/telephone system of the invention.
Figure 18 is a depiction of the structure and functioning of the software of the primary microprocessor used in the invention.
Figure 19 is a depiction of the structure and functioning of the software of the primary microprocessor used in the invention, showing system configuration parameters.
Figure 20 is a functional diagram of the telephone electronics and reLated communications features of the telephone device of the present invention.
Figure 21 is a functional diagram of the primary microprocessor of the present invention and its input and outputs.

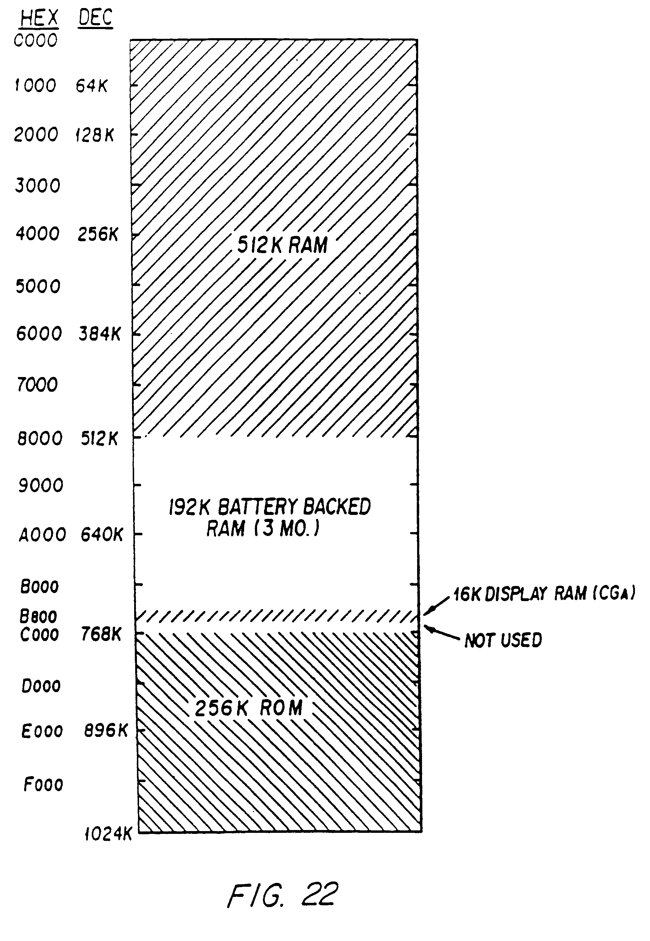

Figure 22 is a memory map of the memory elements of the primary microprocessor of the present invention.
Figures 23 and 24 are perspective and plan views of the invention as used in a public booth deployed with peripheral equipment.
Figures 25a, 25b, and 25c are schematic diagrams showing a remote terminal system employing cellular telephone communications.
Figure 26 is a schematic diagram showing a remote terminal system communicating with a host computer over a cellular telephone communication channel.

### Detailed Description of the Preferred Embodiments

As mentioned above, a principal object of the invention is to provide a user-friendly terminal suitable for accessing a bank computer system operating various bank software programs, involving individual checking accounts and the like, and additionally providing a user-friendly method of accessing other service computers, such as those which provide airline reservation functions, stock table look-up functions, electronic bulletin board services, and a vast panoply of other such services, and which can also operate as a conventional telephone. It will be appreciated by those of skill in the art that typically in order to access such a diverse variety of services one must have educated oneself in a equal variety of terminal protocols and communication methods, which can be quite complex. For example, simply to keep track of the various user codes and access steps required to access each of these services is a substantial undertaking.

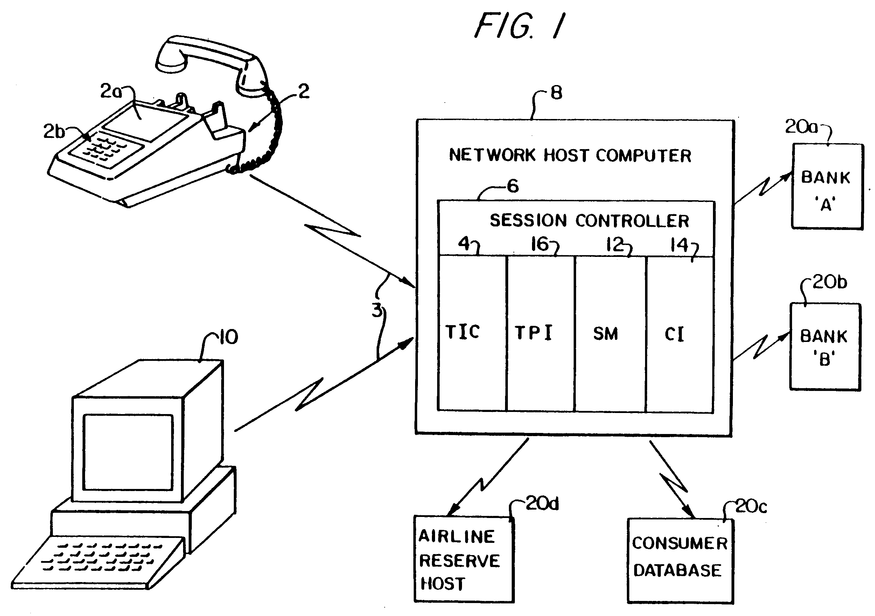

According to the invention more particularly described in copending application Serial No. 08/084,319 filed June 30, 1993 which is a continuation of application serial no. 07/433,825 filed November 9, 1989 (now abandoned), incorporated herein by reference, this capability is provided in accordance with Figure 1. Essentially, each user is provided with a user-friendly terminal 2 which resembles a conventional telephone, including a display 2a and limited format keypad 2b, or may alternatively employ a conventional personal computer as indicated generally at 10. According to the invention described in Serial No. 08/084,319 filed June 30, 1993 which is a continuation of application serial no. 07/433,825 filed November 9, 1989 (now abandoned), both terminals are connected by conventional telephone lines indicated generally at 3 to a network host computer 8. The network host computer includes a session controller 6, which may comprise hardware and software and which includes various functional elements 4, 12, 14, and 16, as described more fully in Serial No. 08/084,319 filed June 30, 1993 which is a continuation of application serial no. 07/433,825 filed November 9, 1989 (now abandoned). One essential function of the network host computer 8 is to provide a series of application program "pages" which are downloaded to the home terminal 2 or 10 and which provide it with sufficient information that it can supply the user with sufficient "prompts" to elicit from the user whatever information - user codes, desired transactions, and the like - is required to access one of a plurality of service computers 20a - d to which the network host computer 8 is connected, also by conventional telephone lines.

More particularly, suppose the user desires to access the service computer 20a of a particular bank A. When he activates his home terminal 2, there will appear on a display screen 2a a menu allowing him to select "Access Bank Services" by pressing, for example, the "3" button on the keypad 2b. If be does so, the terminal 2 will send a message to the network host computer 8. This will in turn consult its internal memory to locate the application program required to access the service computer 20a of bank A and will download this to the home terminal 2. The home terminal will in turn operate using this program and will ask the user various questions required to prompt the user to input the information needed to access his account at the bank -- for example, his account number, his secret access code, the type of transaction desired, the amount of deposit, withdrawal, or transfer required, and so on. This information is then transferred from the home terminal 2 to the network host computer 8 in a message having a first protocol; see Serial No. 08/084,319 filed June 30, 1993 which is a continuation of application serial no. 07/433,825 filed November 9, 1989 (now abandoned), referred to above. The network host computer transforms this information into whatever second protocol is conventionally required to communicate with the service computer 20a, for example, in the precise manner according to which automatic teller machines communicate with it. If on the other hand the consumer desired to access Bank B, typically the consumer will be asked the same questions by way of prompts, but the network host computer will transform the answers into a somewhat different protocol required to access the service computer 20b of Bank B.

In a similar manner, if the consumer desires to access an airline reservation host computer 20d, a somewhat different sequence of prompts would be provided by the home terminal 2, operating using an appropriate different "page" of application program software downloaded by the network host computer 8; a similarly different communication sequence would occur between the network host computer 8 and the airline reservation host computer 20d. The communication sequence and in particular the detailed format of the messages back and forth between the terminal 2 and the network host 8 are discussed in detail in Serial No. 08/084,319 filed June 30, 1993 which is a continuation of application serial no. 07/433,825 filed November 9, 1989 (now abandoned), referred to above and incorporated by reference herein. Communication between the network host 8 and the various service computers 20a - d takes place according to various second protocols defined by the proprietors of the services supported by the service computers; implementation of these communications follows the techniques now in use with such preexisting service computers and is considered to be well within the skill of the art.

It will be appreciated by those of skill in the art that the accessing of the various service computers 20a - d and countless others requires that the network host computer be enabled to communicate according to a like variety of protocols. Typically, these will be implemented by IBM personal computer software programs; the user terminal 2 will therefore most conveniently also conform to the PC architecture as defined above. Further, as indicated above, it is an object of the invention that the terminal 2 be capable of running other PC-compatible programs. A conventional personal computer 10 can also be used according to the invention to communicate with the various service computers 20a - d by way or the network host computer 8. Again, "pages" of application software can be downloaded from the network host 8 to the conventional PC 10 in response to the user's selection of a particular service computer 20a-d. This will enable the home terminal to "prompt" the user 2 to input whatever data is required to access the appropriate service computer.

As discussed above, it is an object of the invention to provide a home terminal 2 in a form physically resembling a standard telephone, and providing PC functions, while requiring no additional disk drives, printers or other peripherals, and in particular to do so while avoiding provision of elaborate keyboards as conventionally required by the prior art computers running PC-compatible software. However, embodiments or the home terminal 2 which do include full alphanumeric keyboards are within the scope of the invention. Similarly, conventional PC peripherals can be connected to the computer provided by the terminal of the invention. This facility is of particular use when previously unsophisticated computer users desire to add new capabilities to the terminal provided according to the invention, e.g., as they become more knowledgeable. However, in order to achieve the basic user-friendly nonthreatening appearance of the terminal of the invention, it is essential that the computer fitting within the physical housing of the conventional telephone 2 be able to mimic a PC configured in accordance with the requirements of a wide variety of software, particularly with respect to the response of conventional disk drives and the like to PC-compatible software.

Megatel Computer (1986) Corporation has been selling single board computers which conform to the PC architecture, and which employ programmable gate arrays for more than one year. However, the Megatel computer has not prior to the present invention been used to provide conventional telephone functions as disclosed herein and in the related applications discussed above. In particular, it is important to achieving several of the objects of the invention that the programmable gate array be remotely reconfigurable by supply of reconfiguration code from a network host computer 8, in order to avoid "software viruses" by altering banking security arrangements, for example by adding data encryption facilities for making communications more secure, and the like. In this way, additional terminal functions can also be remotely added to the telephone resembling terminal 2 after its installation in a user's home. This has not been done prior to the present invention by Megatel or otherwise so far as the present inventors are aware.

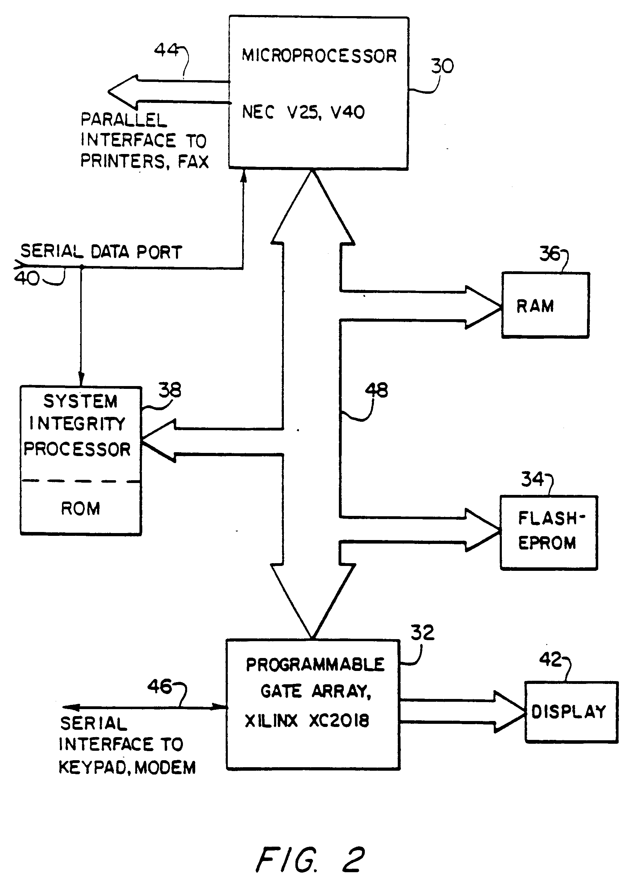

Figure 2 shows in block diagram form the principal elements of the remotely-reconfigurable computer system comprised by the user terminal 2. A microprocessor 30 which may comprise a Nippon Electric Corporation (NEC) Model V25 or V40 or the equivalent is connected to a programmable gate array 32 which as indicated above will typically be the model XC2018 of Xilinx Corporation of San Jose, California. The programmable gate array 32 comprises a number of logic gates which are configurable by "configuration code" supplied from a read-only memory (ROM) or elsewhere to take on certain specific functions. Thus by supplying "reconfiguration code", these functions are redefinable at will. In the present case, the reconfiguration code necessary to program the gate array so that the system can carry out its assigned functions, which code is termed the "operational reconfiguration code", is stored in a reprogrammable read-only memory 34. Particularly, this read-only memory 34 is so-called "FLASH-EPROM", which is rewritable in response to a signal received from a remote location. The advantage of this will be apparent to those of skill in the art: if it is desired to reconfigure the programmable gate array, for example, to cure a software bug or eliminate a virus, this can be done remotely simply by supplying new configuration code to the FLASH-EPROM 34. 256 kilobytes of FLASH-EPROM will normally be sufficient.

For example, in the banking terminal application, suppose that a computer virus is attacking the microprocessors 30 of the user terminals. Any such virus will have to conform to the microcode used to run the microprocessor. According to the invention, some of the functions of the gates internal to the programmable gate array 32 can simply be reversed, and a corresponding change made to all software downloaded to the terminal to enable it to access the various service computers. The virus, not having the benefit of the change, will cease to operate and thus cease to interfere with the operation of the terminal. Similarly, if communication between the service terminals and the service computers tends to be corrupted or tapped, data encryption can be provided by reconfiguring some portion of the code stored in the FLASH-EPROM and thus reconfiguring the gates of the programmable gate array.

The microprocessor 30 and the programmable gate array 32 are connected as well to a main memory 36 which comprises random access memory (RAM) as is conventional in the art. Up to 2 megabytes of memory are typically provided. The random access memory 36 will normally be used to store application programs downloaded from remote host, but also stores reconfiguration code when first received, prior to its being copied into the FLASH-EPROM.

A communication path to the network host computer 8 (Fig. 1) is provided via a serial data port indicated generally at 40. In one embodiment of the invention, port 40 is also connected to a system integrity chip 38 typically comprising a single chip Model 16C54 computer sold by the Microchip Corporation. This chip has the capability of both storing and executing code. Certain "kernel" code required to initially program the programmable gate array chip 32 is permanently stored in non-volatile, non-rewriteable ROM comprised by the system integrity chip 38 at manufacture. Thus, in response to a simple reset signal receive from the outside port 40, the system integrity chip is capable of copying this kernel code to the programmable gate array chip 32. Typically the PGA chip 32 will first exercise the microprocessor 30 and verify circuit connections. Thereafter, the configuration code can be downloaded via the same port 40 or another port, stored in the random access memory 36, copied to the FLASH-EPROM 34, and used to reconfigure the programmable gate array 32.

More particularly, suppose that through error the entire system has been deprogrammed, or alternatively suppose that the terminal is being manufactured and has never been programmed. In either case, the ROM of the system integrity processor 38 will have stored therein the basic "kernel" or "system initialization software", required to allow configuration of the programmable gate array device. The system integrity chip, which may also be termed a "test processor", initially configures a portion of the programmable gate array device to perform a "serial scan test" which will verify the physical circuit connections of the chip. This is particularly useful because the programmable gate array chip 32 will typically be physically connected to substantially all signal paths on the circuit board, so that this test is in fact substantially complete.

The system integrity processor 38, having completed this test, then causes a first group of "system verification software" to be downloaded either from an external processor, such as the host network computer, or from a technician's test device, to reconfigure a portion of the programmable gate array to resemble read-only memory containing certain predetermined microcode. This microcode is then used by the microprocessor 30 to test its own functions, which typically will include testing of the random access and read-only memory devices.

At this point, the microprocessor 30 can take over operations, and causes further reconfiguration code, the "operational reconfiguration code" (according to which the programmable gate array chip 32 is configured to perform its ultimately desired functions) to be downloaded. This is stored first in the random access memory 36, then copied to the read-only memory 34 and is then used to reconfigure the programmable gate array device 32 into its operational configuration, thus completing initial loading or test of the terminal device of the invention.

In the preferred embodiment, the "operational reconfiguration code" is stored in duplicate in the FLASH-EPROM. This allows the two versions to be compared to one another, providing an additional check on system integrity.

As discussed above, one of the principal functions of the programmable gate array 32, which is comparable to the functions performed by custom chips in IBM PCs and by programmable array logic (PAL) chips in other PC-compatibles, is to interface the microprocessor 30 to a display 42, which may be one of a variety of different units. In the telephone-resembling terminal 2 of Figure 1, the preferred display unit 2a is currently a flat panel liquid crystal display (LCD). However, the programmable gate array can also be readily reprogrammed to drive other sorts of displays such as conventional EGA or CGA monitors, plasma displays or the like. In some case it may be desired to employ a further additional display driver chip, which itself provides certain display driver modification possibilities. Again, the reconfigurability of the programmable gate array allows very substantial flexibility in the use of the device according to the invention.

As indicated generally at 44, the microprocessor 30 is connected to certain of the input-output chips directly; typically, these may include parallel interfaces such as printer ports and interfaces for digital facsimile equipment. By comparison, the programmable gate array is typically connected to other input-output devices 46 which are serially connected, such is conventional or limited-format keyboards, or a modem.

Those of skill in the art will understand that the diagram in Figure 2 is intended to be a functional depiction, and that in fact various principal components thereof such as the microprocessor 30, the programmable gate array 32, the RAM 36 and the FLASH-EPROM 34 may all be connected by a conventional data bus 48. It is also within the skill of the art to replace the FLASH-EPROM with other memory capable of performing the same functions, such as for example that described as a "silicon file" or as "battery-backed nonvolatile readable and writable memory". Of course, in other circumstances conventional random-access memory can perform some of the functions described above for the FLASH-EPROM 34 as well; again, the key function is that it be capable of receiving and storing reconfiguration code preferably received over a telephone line or the like via a conventional port, so as to enable reconfiguration of the programmable gate array 32 as needed to update the hardware configuration of the system.

In the preferred embodiment of the invention as employed in the telephone-resembling user terminal 2, four distinct levels of software are provided, having different access capabilities, different storage requirements, and different uses as indicated below.

The highest "level" of software in the telephone-emulating version of the system, is referred to as the "home application language" or "HAL" software. The HAL software is downloaded in "pages" from a network host computer in response to the user's indication that a particular service is to be accessed. If the user indicates that he wants to determine his checking account balance, typically by pressing a single button on the terminal 2 in response to a prompt, the terminal 2 sends an appropriate message to the network host 8, after which the network host 8 downloads the appropriate page of HAL software necessary to prompt the user to input his user code and the like. The HAL software when received by the terminal is stored in random access memory (RAM) 36 and normally is run immediately. Certain commonly used pages of HAL application software may also be stored by the terminal, typically in FLASH-EPROM 34, in order to reduce the number of communications required to access the network host where this would appear useful. It is envisioned that on the order of 3 - 10 pages of HAL software might be typically downloaded to a terminal per day. The HAL software thus provides the information necessary to provide the desired user-friendly user interface, and is downloaded in response to the user's specific request. This process is detailed fully in copending Serial No. 08/084,319 filed June 30, 1993 which is a continuation of application serial no. 07/433,825 filed November 9, 1989 (now abandoned). The HAL software is thus functionally comparable to IBM's Disk Operating System (DOS) software.

The next level of software stored in the terminal is the so-called basic input-output system or "BIOS". As is conventional in IBM PC terminology, BIOS software supports various functions shared by various pages of HAL software such as display control, preparation of messages to the network host, support of keyboard functions, and the like. According to the invention, updated "multi-application" BIOS software can be downloaded from the network host when needed, a process which night take place on the order of several times per year. Updated BIOS software will initially be received in RAM and will then be copied to FLASH-EPROM for long term storage. It will be appreciated by those of skill in the art that the BIOS software provides functions which are employed by the HAL software and is thus essential in order that the HAL software can run properly.

The next Lower level of software is the reconfiguration software or code which defines the state of the programmable gate array (PGA). This is also referred to as "PGA code" or "configuration code". Functions provided by the PGA chip programmed in accordance with the PGA code include functions which must be performed at high speed, such an memory control and timing, and parity checking with respect to various data communication paths, as well as providing the logic connecting the microprocessor to the RAM, ROM and input/output devices.

An in the case of the BIOS software, any update to this reconfiguration code downloaded from the network host is initially stored in the random access memory and then is copied to the FLASH-EPROM and used to reconfigure the PGA chip as need be. For example, if it appears that a software virus is active, the hardware can readily be reconfigured such that the virus could no longer run on the terminal. This would of course necessitate that other software including the BIOS and possibly the HAL software be at least partially rewritten. However, those tasks can also be accomplished remotely.

The advantage of this facility is clear; for further examples, the PGA code could also be altered remotely if it were desired to add additional functions to the terminal of the invention, such as adding a facsimile capability, a smart card interface, magnetic or optical memory elements, or the like. In some cases it might also be necessary to reconfigure the PGA code to cure a flaw in the hardware design detected some time later. Again, each of these options substantially increases the utility of the terminal. It is not envisioned, however, that the PGA code will be altered more than once or twice over the lifetime of the product, which is anticipated to be on the order of ten years.

As indicated above, the PGA code, having reconfigured the PGA chip, thus provides the foundation on which the BIOS software operates; accordingly, the PGA chip must be configured properly for the various input-output functions controlled by BIOS to operate properly.

The final and lowest level of software is referred to as a "kernel". This software in permanently written to nonvolatile read only memory comprised by the system integrity chip 38 or possibly by a separate ROM. It is this kernel which operates the system to the extent required to allow the reconfiguration software to be downloaded to the terminal in order to initially program the PGA chip as indicated above. It in not possible to alter the kernel after manufacture of the system. Again, this Software in essential in order that the LCA chip can be reconfigured by supply of reconfiguration code.

It will have been appreciated that the above described software structure provides partitioning of the various elements of software according to their functions and their frequency and ease of access. The higher level software will be more frequently accessed. Similarly, the higher levels are variable in response to a user request (in the case of the HAL application) or relatively readily by the operator of the network host (in the case of the BIOS software). Access to the LCA reconfiguration software will be restricted to the manufacturers or to a relatively small group of the system operators in order to ensure that this highly significant software is not tampered with. As noted the kernel software is not alterable.

As indicated above, an extremely important object of the present invention is to allow the user to access a bank data base. Clearly in order to avoid compromising the integrity of the data base, and to restrain fraudulent transactions or the like, the system must be made highly reliable. The capability of reconfiguring the actual logic of the terminal according to the invention substantially enhances this security. In this way, a hardware change can be made at any time to support a change in the software desired, for example, to alter access requirements to prevent fraudulent users or to forbid them to access the data base. Those of skill in the art will immediately recognize a number of specific changes which can be made to prevent preexisting software from running on the terminal. For example, data encryption could be made essential to all terminal-to-network host communications. Regular changes, e.g. once per month, could be instituted to prevent any "hacker", from obtaining access, for example, simply by regularly changing the encryption method used.

Referring to FIG. 1, the method of the present invention is performed through a home terminal 2 connected via a conventional telephone circuit 3 to a session controller 6, which may comprise both hardware and software, as understood by those of skill in the art, and which is resident in a network host computer system 8.

According to the invention, the home terminal 2 physically resembles a telephone with a display screen 2a, as described in the Weiss et al applications discussed above. However, certain aspects of the invention may be applicable to more conventional microcomputer systems, as shown at 10. Indeed, according to one aspect of the invention described herein, the telephone-resembling user terminal 2 functionally mimics an IBM PC/XT microcomputer, such as computer 10, in certain aspects.

The session controller 6 provided according to the present invention serves as a link between the microcomputer 2 and/or 10 and a plurality of informational and financial service computer systems 20(a-d). As indicated, service computers 20(a-d) typically are themselves host computer systems such as bank computers, airline reservation computers, host computers running database access systems, etc., which conventionally respond to inquiries from remote systems. It would also be possible to physically provide the network host computer 8 as a part of one of the service computers 20 (a-d). For example, the network host computer 8 might be physically configured as a portion of a computer also serving as a bank service computer. The claims of this application are intended to include this possibility.

According to an important aspect of the invention, the function of the session controller 6 is to allow the user to conveniently employ the microcomputer resembling a telephone 2 as described in the Weiss et al application to access the remote service computers 20(a-d); notably, this is accomplished according to the invention without modifying the software of the service computers 20(a-d). Thus, an important function of the network host 6 and of the user terminal 2 and the HAL software which it runs is to cooperatively transform the highly simplified, "user-friendly" request/response sequence seen and responded to by the user into the relatively complex communication sequence normally used to access the service computers 20(a-d), and, vice versa, to modify the specialized display sequence typically presented by the service computers 20(a-d) into an easily understood presentation.

More particularly, as is understood by those of skill in the art, each of the service computers 20(a-d) provides a different service, e.g., stock ticker information, airline reservations, bank transaction services, and a myriad of others. To access each of these services conventionally requires that the user have available one or more access codes, and that he has memorized the appropriate sequence of responses to "prompts". Each of these sequences is different, and each conventionally requires some education.

For example, in a typical automatic teller machine transaction, the user is first required to insert a card which includes a user identification. He then is prompted to input in access code. The system correlates this with the identification provided by the card, to ensure that the user is duly authorized. He is then prompted to select a transaction, and an account. Depending on the transaction selected, various other options must be selected. All of the response sequences must be learned before the user can employ the system. By comparison, if using a legal research database, for example, an entirely different sequence of steps must be negotiated. Accordingly, the consumer must be separately educated with respect to each service he desires to use. Clearly, this represents a significant barrier to the wide acceptance and use of these systems.

By comparison, according to the invention, the network host 8 is interposed between the user terminals 2 and each service computer system 20 (a-d). The network host 8 thus works in concert with the user terminals 2, in particular by supplying to the user terminal 2 one or more pages of HAL application software which "personalizes" the user terminal 2 to the service computer 20(a-d). The user terminal 2 is enabled by the application software to prompt the user to supply any information needed to access the service computer. The network host 8 then translates the user data, received from the user terminal 2 in a first user terminal format, into whatever service computer communication format is required by the service computer 20(a-d) selected. Thus, the user sees an essentially similar selection of simple queries (e.g., "Input User Code", "Press 4 for Checking Account, 6 For Saving Account", "Press # for Previous Screen", "Press * to Authorize Auto Payment") regardless of the service he has selected. The "user-friendliness" thus provided by the network host and the user terminal of the invention in response to the user's selection of a particular service is very significant in achieving the objects of the invention.

For example, at any given time, the display 2a of the user terminal may include the user's last response (e.g., in a banking transaction, "National Bank of Washington") the information being sought (e.g., "Select Account Desired"), and a list of prompts, indicating the choices available to the user by pressing a single button on the keypunch (e.g., "Press 1 for Savings, 2 for Checking, 3 for Money Market") as well as a series of help prompts also selectable by pressing a single button (e.g., "Hit * to Back Up, 0 to Start Over, # for More Choices").

According to an important aspect of the invention, these menu choices are varied in accordance with the service selected by the user. That is, the user-friendly interface, comprising a "tree" of new menus displayed sequentially and in response to each input provided by the user, until all information required to access the service has been specified, thus varies with the service. Provision of application programs page by page in response to the specification of a service according to the invention permits this flexibility, as it would be impractical to store all possible application programs in the user terminal.

The session controller 6 functionally comprises a terminal interface controller (TIC) 4, a terminal protocol interface (TPI) 10, a session manager (SM) 12, and a common integrator (CI) 14. The TIC 4 monitors the message flow between the home terminal 2 and the TPI 10 and controls timers to cause timeouts when message traffic ceases. This is important in ensuring that the terminal 2 properly provides the normal telephone functions. See the Weiss et al applications referred to above. The TPI 10 communicates with the home terminal 2 and translates the protocol used by the home terminal when first establishing a connection with the host network computer 8. Additionally, the TPI 10 generates random encryption key numbers when requested by the home terminal 2. These encryption key numbers are used by the terminal program to transmit confidential information. The TPI 10 also handles application page downloading requests.

The SM 12 maintains the essential data needed for each communication session by storing information relating to the user of the terminal 2 and the service computer system 20(a-d) which the user is accessing. All transactions performed between the home terminal 2 and the session controller 6 during a particular session occur within the context of the specific consumer and the service selected, e.g., his bank or other financial institution. For example, after the consumer has been successfully established as a valid and authorized user, all message traffic to the particular terminal is thereafter considered related only to that consumer. This context determination, based on the consumer identification information, then allows the network host computer 8 to access the correct service computer 20(a-d) for such items as account balances, and so on. The SM 12 stores the contextual information required to validate the transaction and inserts it in messages passed to the CI 14 when necessary. The SM 12 also serves as the interface between the TPI 10 and the CI 14, which in turn serves as the communication link between the other elements of the session controller 6 and the service' computer systems 20 (a-d).

According to the method of the present invention, the user accesses one particular service computer 20(a-d) by selecting the corresponding option, i.e. the desired service, from a menu displaying the possible choices on the LCD of his home terminal. Communication between the home terminal 2, the session controller 6 and the selected service computer 20(a-d) is then begun with a session establishment and protocol selection phase.

During the session establishment and protocol selection phase, the home terminal 2 connects to the network host computer 8 through a standard telephone line 3. After the connection has been established, the home terminal 2 sends a series of signals by which the session controller 6 sets such parameters as the communication baud rate. For example, after the network host computer 8 sets the communication baud rate, it responds with a terminal type inquiry. The home terminal 2 interprets this signal as a request to identify the type of terminal in use and responds with an ASCII code identifying the type of home terminal being used, i.e. a microcomputer/telephone 2 according to the Weiss et al invention, a standard microcomputer 10 employed conventionally to access the service computers, or some other remote terminal type.

During this session establishment phase the terminal 2 may also request the user to provide a personal serial number, to ensure that the user is in fact authorized to use the terminal. A terminal ID number may also be required to be included in some of the messages. The network host is capable of deleting either serial number from lists of validated serial numbers, so as to prevent users who become unauthorized (e.g. by failure to keep accounts current, etc.) from using the system.

According to the invention, the network host 8 provides the important function of allowing the home terminal 2 to mimic a conventional microcomputer 10 running essentially conventional communication software. Therefore, the service computer 20(a-d) receives communication in precisely the same "service computer communication protocol" which it conventionally receives. Accordingly, the service computers need not be modified in any way for communication according to the invention, which is essential to achieving the objects thereof. As indicated, such conventional microcomputer systems 10 may be also interfaced to the service computers 20(a-d) by way of the network host 8 according to the invention. In such case, the network host 8 will again respond to a request for access to a service computer 20(a-d) by downloading one or more "pages" of application software, user prompts, etc., allowing the conventional microcomputer 10 to conveniently access the service computer 20(a-d).

The manner in which the user terminal 2 is enabled to mimic a conventional microcomputer 10 for the purpose of communicating with the service computers 20(a-d) via the network host 8 is disclosed herein.

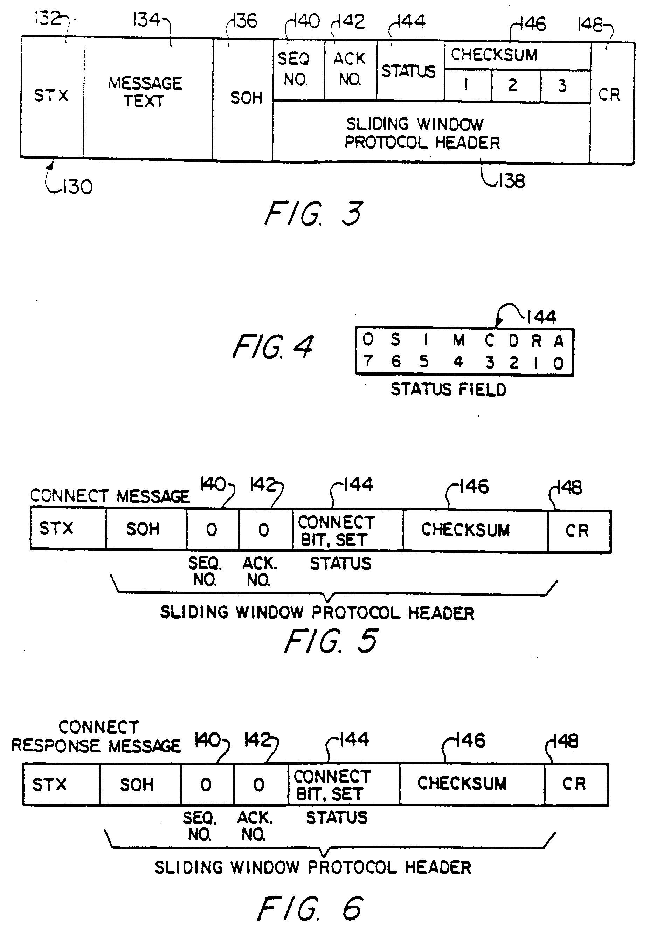

After a communication session has thus been established, a "link level" protocol, is employed between the home computer and the session controller. In the link level protocol, all communications between the home terminal 2 (or a conventional microcomputer 10, if used) and the network host computer 8 are formatted into information packets called messages. Fig. 3 shows the basic format of the message 130. This message format is used for the majority of the messages sent between the network host and terminal 2 or computer 10. Other related formats are used in special canes discussed below.

Each message 130 begins with a one-byte start of text (STX) delimiter 132 which consists of the fixed ASCII code "2". The next field of the message, the message text field 134, can contain up to 256 bytes of transaction information. It is within this message text field 134 that the actual transaction information is transferred. The message text field 134 can also contain information concerning the status of the message.

Following the message text field 134 is a one-byte start of header (SOH) delimiter 136 which has a fixed ASCII value of "1". This SOH delimiter 136 signifies the end of the message text field 134 and the start of the sliding Window Protocol Header 138.

The Sliding Window Protocol Header 138 is provided according to an important aspect of the present invention, and contains control and error management information. This header 138 comprises a sequence number field 140, an acknowledge number field 142, a status field 144, and a checksum field 146, totalling six bytes in length.

The sequence number field 140 is important to the error detection and control system employed according to the invention. This field contains a sequence number assigned by the transmitting device (i.e. either the home terminal 2 or the network host) to each message sent. More specifically, the sequence number field 140 contains a one-byte ASCII encoded number from 0 to 9 specifying the order of the message 130 in a series of transmitted messages. The sequence numbers are assigned independently to the messages sent in both directions. Each successive message 130 is assigned a reference number one greater than that of the preceding message 130. The sequence numbers are applied in a cyclical fashion. That is, when sequence number 9 has been assigned to a message, the next message is assigned sequence number 0. This process is referred to as the "sliding window protocol" used for error detection and correction according to the invention.

The receiving device stores the sequence number of the message most recently received. When a new message is received, the receiving device determines if the content of the sequence number field 140 is one greater than the sequence number of the preceding message received. If not, an error has been detected, and the receiving device directs the transmitting device to resend the preceding message.

Additional security is provided by use of the checksum field 146, which contains a byte count for the entire message, which is written to the message by the network computer. This checksum value is compared with the byte count as determined by the receiving terminal. If the checksum value is correct and the sequence number is in the proper order, the message is considered to have been received in good condition.

The acknowledgement number field 142 of each message contains the sequence number of the last message received in good condition. Until this acknowledgement number is received, the transmitting device stores the messages in a buffer for possible retransmission. If the transmitting device has stored one or more messages with higher sequence numbers than the last received acknowledgement number, those messages with a greater sequence number are retransmitted. Correspondingly, when an acknowledgement number is received, all stored messages having sequence numbers less than or equal to the last received acknowledgement number are discarded. This sequencing and acknowledgment method allows for the continuous flow of information without the delay associated with acknowledging each message before transmitting the next, and limits the amount of data which must be stored to implement this error correction arrangement.

It will be appreciated by those of skill in the art that sliding window protocols of this general type, including use of sequence numbers and acknowledgement of messages, are generally known to the art. See generally, Tanenbaum, Computer Networks (Prentice Hall, 1981), esp. §4.2 "Sliding Window Protocols", pp. 148-164.

There is, however, one limitation on this continuous flow of messages. Because the range of reference numbers is finite, the maximum number of messages which can be sent without repeating a reference number is 10. Accordingly, if all the sequence numbers available in the finite range 0-9 have been assigned to unacknowledged messages, the transmitting device ceases message transmissions and sends an immediate acknowledgement request in a null message, that is, a message which contains no information in its message text field, but which has a sequence number equal to that of the preceding message. The receiving device recognizes a null message by its repetition of the preceding sequence number. A null message is thus used to convey control information such as an immediate acknowledgement request.

The status field 144 is a one byte (eight bit) field which informs the receiving device of the status of the message and provides a medium for various control requests. Figure 4 details the bits of the status field 144. Bits 7 and 6 are always set to zero and one, respectively, so that the value of the complete status byte 144 is in the range of 32 to 127. Hence, the value of the status field can be represented by the ASCII codes for print characters, which is convenient for diagnostic purposes. Bit 6 indicates the transmission channel over which the message is travelling. A value of 0 in bit 6 represents a foreground, or high priority, transmission channel, and a value of 1 in bit 6 indicates use of a background, or low priority, transmission channel.

Bit 4 is used to inform the receiving computer whether the response is contained in more than one message and whether there is at least one more message to come which is related to the response contained in the present message. A value of 0 in bit 4 indicates that the present message is the last or only segment in a response while a value of 1 in bit 4 informs the receiving computer that the present message is the first or an intermediate segment of a multi-segment response.

Bit 3 distinguishes normal session messages from connect messages used when communications are first established between the home computer and the network computer. A bit 3 value of 0 represents a normal data message, while a bit 3 value of 1 signifies a connect request or response. Similarly, bit 2 indicates whether a massage is a normal session message or a disconnect request, in which 0 indicates a normal session message and 1 requests a disconnect.

Bit 1 is set to a value of 1 to request retransmission of all unacknowledged messages, i.e., messages with a higher reference number than the acknowledgement number of the message containing the retransmission request. A 0 value in bit 1 indicates a normal message.

Bit 0 is set to a value of 1 to request acknowledgement from the receiving computer. This signal would be sent, for example, in the situation explained above, in which the sending computer has used all of the reference numbers and requires an acknowledgement before sending any more messages. A 0 value in bit 0 indicates a normal message.

The checksum field 146 as indicated above contains a bit count or similar value calculated by the sending device; the same calculation is performed by the receiving device and compared to the stored value to confirm that the message has been correctly received.

Finally, the message 180 concludes with a carriage return (CR) 148.

According to the invention, when one of the devices involved in a communication session sends a message 130 containing either an acknowledgement request, an acknowledgement response, a retransmit request, a connect request or a disconnect request, there may be no transaction data to be transmitted in the message text field. Hence, this information is sent through a null message, including a repeated referance number as above. This informs the receiving computer that any transaction data that may be contained in the text field is to be ignored and that the header information only is to be read. Of course, it is not necessary to send a null message for the above mentioned requests and responses. Instead, a normal message may be used which sends the request or response information, while transaction information is sent in the text field. Null messages are sent when a normal message is not available and an acknowledgement has been requested, or when the maximum number of messages is outstanding, and no more normal messages may be sent.

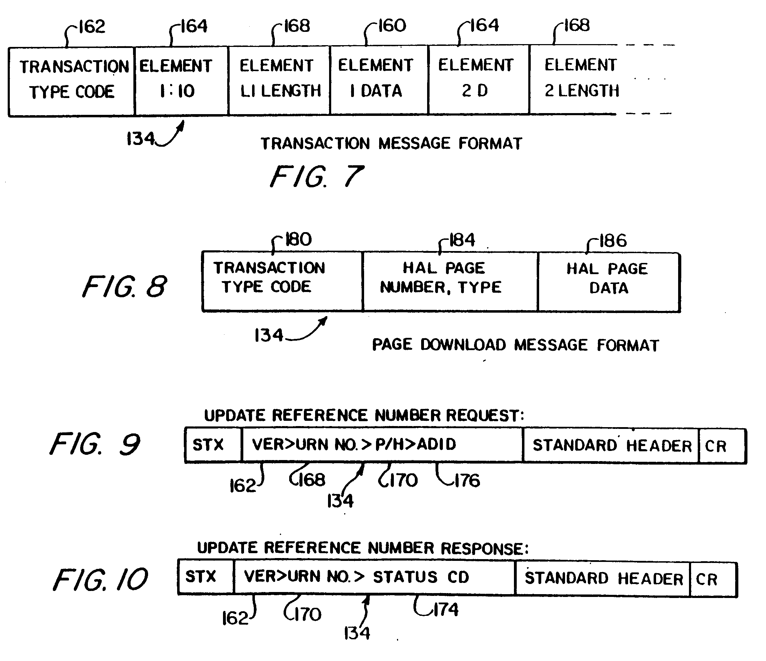

In establishing a communication session, the home terminal sends a connect request message, shown in Fig. 5. When the session controller returns a connect response, shown in Fig. 6, the session is established and all subsequent communications proceed using the message format discussed above. At the beginning of each session, a series of messages (shown in Figs. 9 and 10) are exchanged to determine if the application pages resident in the home terminal are current versions. Where necessary, outdated application pages in the home terminal are replaced by current versions which are downloaded to the home terminal, page by page, as need be, using the predefined message format. Updates are made only with respect to the application page(s) specific to the service of current interest to the user. This reduces the delay experienced by the user, while eliminating any requirement that all users have the same version of each application page.

Because some transactions available through the network involve individual financial accounts, an exchange of user verification messages is employed in these cases to ensure against unauthorized manipulation of consumer accounts. According to this aspect of the invention, when the user has indicated his intention to perform a financial transaction or other transaction requiring access to a secure database, the terminal program interface (TPI) 10 instructs the terminal computer via a downloaded page to send a request for an encryption key. The TPI returns a randomly generated key. The terminal 2 uses this to encrypt the consumer's personal identification code (PIC), that is, a code indicating his right to access the secure database. The encrypted PIC is then transmitted to the network host 8 in a user verification message. Similarly, any other secure information may be encrypted at any time during a session if the terminal program includes instructions for sending additional encryption messages. Each time a key is requested, a new encryption key is generated.

After the user verification stage is complete, (which as noted above may also include a step of identifying the user to the terminal by input of his serial number, or identification of the terminal to the network host, either or both of which must be validated before the transaction can proceed) the consumer may perform various transactions with the informational and financial service computer systems. Such transactions can take a variety of forms, as will be understood by those of skill in the art.

Once the page updating procedure has been completed as necessary and the home terminal is loaded with the application pages necessary to access the service the consumer desires, the consumer can effect transactions with service providers. Operations then proceed in a simple and straightforward manner. The consumer is prompted by software downloaded to the home terminal as need be to provide any additional input required, and the appropriate message is sent by the home terminal to the service computer which actively accesses the database bank records, etc., involved. Again, according to the invention, the home terminal 2 provides a user-friendly interface, and the network host computer 8 translates the user's responses to prompts, sent by the user terminal 2 to the host in a first format, into the format conventionally employed to access the particular service computer 20(a-d) providing the service desired.

In general, it is desirable that the prompts be sufficiently definite that the user can input all required instructions using only the 12 keys of a telephone keypad responsive to prompts which are updated in response to the sequence of prior responses. This greatly simplifies use of the system, and contributes substantially to the user friendliness which is a goal of the invention. However, in some cases it may be necessary to provide all 26 alphabetic keys as well, e.g. to spell out airline destinations. In such cases, a small keyboard sliding out of the housing of the user terminal may be provided. See co-pending Serial No. 380,557. Of course, this problem does not arise if the system and method of the invention are employed to facilitate access to service computers using a conventional microcomputer 10.

As mentioned above, according to the invention, if the consumer wishes to use a service for which the home terminal has not stored the application pages, an explicit request message can be sent for the necessary pages. For instance, if the consumer is conducting transactions with his bank's computer system and desires to check stock market listings from the stock marked informational services, the consumer exits the bank service and responds to menu guides then provided by the home terminal software to access a conventional stock market service. The application page which instructs the microcomputer to display the menu containing the stock market service option also contains the instructions to call up the stock market service application pages from the resident memory. Accordingly, if the home terminal 2 finds that the application page for the stock market service is not stored in the resident memory, the terminal 2 will send an explicit page request containing the page number for the stock exchange service application page to the network computer 8. This capability clearly provides unprecedented flexibility in provision of network access to users operating simple, low-cost, user-friendly terminal devices according to the invention.

The following provides additional exemplary details of typical message formats and communication sequences according to the invention. Other communication sequences, as needed, are within the skill of the art, given the disclosure provided by this application.

When a communication session between the home terminal 2 and the network host computer 8 has been established and both devices are prepared to communicate in the link level protocol message format of Fig. 3, the home terminal 2 sends a connect request message shown in FIG. 5. The connect request message contains no information in the message text field, but the connect bit, bit 3 of the status field 144 of the sliding window protocol header (see Fig. 4), is set to 1. The sequence and acknowledgment fields 140 and 142 are shown in FIG. 5 is set to zero, but the sequence number may begin as a number from 0 to 9.

When the network host computer 8 receives the connect request message of Fig. 5 from the home terminal 2, it sends a connect message response shown in FIG. 6. As with the connect request message, the connect bit in the status field 144 is set to 1. Although the sequence and acknowledgement fields 140 and 142 are again shown here as "0", the network computer echoes back, in the acknowledgment field 142 of the connect response message, the sequence number sent by the home terminal in the connect request message. As noted, the network terminal 8 may start the sequence with any number from 0 to 9. In its next message, the home terminal 2 will similarly include an acknowledgement number equal to the sequence number of the connect response message. The other fields of the connect and connect response messages are as described above.

As discussed above, to ensure the availability of the most current software on the home terminal, individual HAL pages resident in the home terminal are updated as necessary. Superseded and outdated pages are purged, and revised versions replace earlier versions. As storage is limited in the home terminal 2, only the pages that are frequently used by the individual consumer are resident in the home terminal. Infrequently used pages can be provided by the network host computer 8 when needed by the home terminal 2 to access infrequently used network service providers. The updating process occurs at the beginning of each session, but page downloads can be requested at any time throughout the session, after the log-on process has been completed. The same communication process can be used to update pages normally stored in the home terminal when necessary.

Current versions of all HAL pages are stored by the network host computer 8. When new versions are developed, the new pages are transferred to the data bank of the network host computer 8. The updated pages are transferred to the home terminal 2 page-by-page during normal communication sessions.

The format of the message text field of messages exchanged during the page downloading process is different than when used for transaction messages. Figures 7 and 8 illustrate, the different formats used within the message text field 134 with respect to conventional transaction messages and page downloading messages, respectively. As shown in Fig. 7, the transaction message includes a transaction type code field 162. All transaction type codes are three characters in length. The subsequent message elements 162, 164, 168, 160 are identified by their positions in the text field rather than by element ID fields.

More particularly, as shown in Figure 7, the message text field 134 includes at least four sub-fields when used for sending transaction message text. The first field of the message text field 134 is a transaction type code 162, which is normally numeric. This is followed by one or more groups of three fields. Each group of three fields includes an element identification field 164, an element length field 168 and the actual element data field 160. For example, when the service computer 20(a-d) selected requires a user identification number, and a request to this effect has been sent to the home terminal 2 by the network host computer 8, the rome terminal generates a message including a code in the element ID field 164 indicating that the subsequent element data field 160 includes the user identification number. The element length field 168 then simply includes the actual length in bits of the data element 160. Additional data, such as the user account number, can be included in the same message; again, the account number would be located in an element data field 160, and would be preceded by a element ID indicating that the subsequent data field includes the account number, and an element length field 168.

This method of communicating data elements, by providing them in groups of three fields, specifying the element identification and the element length, is important to the efficient realization of the communications scheme according to the invention.

Figure 8 shows the format of a page downloaded message. This format is used for downloading pages of HAL software from a network host computer 8 to the individual terminals 2. For example, suppose the home terminal 2 is used to initiate a communication session in response to a user's pressing a key identifying the initial request for access to a service computer 20 (a-d). The initial request for access to a service will be interpreted by the network host 8 to specify the HAL application page to be used to access the service computer. If necessary, the network host will download the latest version of that page using the downloading message text format shown in Figure 8. This text is stored in the message text frame 134 of the overall message shown in Figure 3.

The downloading message text format commences with a transaction type code field 180 in which is provided an alphabetic transaction code indicating, for example, that the subsequent data is a page of a HAL application program. This is followed by a page number field 184 which includes the page number of the following page of software, or other identification data needed.

Finally, the actual application software page needed by the home terminal is provided in a page data field 186.

The following description of Figures 9 and 10 provides a more detailed view of the way in which the home terminal and network host determine that an update of a particular software page or pages is necessary. As noted, to ensure that the home terminal does not utilize outdated application pages, each session begins with a page update exchange. These are exemplary of transaction text messages, and will provide to those of skill in the art sufficient information to implement the other communications necessary to effect the functions of the invention. Other necessary messages generally follow the same format; their detailed functions and implementation are considered to be within the skill of the art.

The home terminal sends an update reference number (URN) request message following the receipt of the connect response message. Referring to FIG. 9, the URN request message is a normal message containing the URN coded request in the message text field. The URN request begins with a transaction code 162, shown here as VER. Thus, the data field 134 in this request message comprises the page numbers 168 of the application pages stored in the home terminal 2 at the beginning of the present session.

The URN messages also specifies in a field 170 marked P/H which type of home terminal is being used. This information is important in determining the priority used in sending update information. The final data field 176 includes the terminal ID (ADID). If the ADID 176 is not validated, or has been de-validated, e.g., upon failure of the user to keep his account current, the transaction is ended.

The network computer responds to the URN request message of Fig. 9 with a URN response message shown in FIG. 10. The transaction code 162 (VER) is repeated. This repetition of transaction codes is used in all transaction messages in order for the receiving device to determine the request message to which a given response applies. This feature is of great importance when several requests are outstanding and responses are returned out of the order in which the requests were made, that is, in connection with message exchanges not employing the sequence and acknowledgement fields of Fig. 3.

The next data field 172 in the URN response is the URN for the current application page stored in the network computer. The final data field is a 2 digit status code 174 which informs the host terminal whether page updating is necessary.

If the home terminal URN is lower than the network computer URN, page updating is necessary. The network host computer 8 accumulates the list of pages that have new versions from a cross reference file, employing the home terminal URN and the network terminal URN.

An immediate send flag is provided which is set to "1" for pages related to particularly significant functions such as log-on or the main menu displayed to the user. These pages are downloaded prior to sending the URN response message, that is, immediately upon establishment of the session. If any of the pages have an Immediate Send flag set to "1", they are put at the top of the download file. The pages with the flag set to "0" are put in a zero length transactional file.

If during the session, following the page update process, the consumer wishes to use a service for which the home terminal does not have the necessary pages, an explicit page request can be sent.

According to the invention described herein, certain elements of the hardware of the user terminal 2 are provided by a logic cell array chip, which is reconfigurable using software downloaded from the network host computer as needed. Such reconfiguration software is stored in a remotely erasable read only memory. Other system functions, such as those necessary to accept and store the reconfiguration software, are provided by permanently written read only memory and by nonreconfigurable hardware.

As indicated above, application programs are downloaded as needed responsive to the user's selection of a particular service. According to another aspect of the invention the underlying software of the terminal, which is necessary to support downloading the application programs, provide display control, carry out communication with the network host 8, provide an initial "main menu" display, and so on, may also be updated from time to time by downloading revised versions from the network host. Preferably this is done separately from any user communication, e.g. outside normal working hours, and is done in such a way that the telephone does not ring. Details of the software structure and its functional partitioning, as well as the way in which the various software components are handled by the terminal, are described elsewhere herein.

It will be appreciated by those of skill in the art that there have been described several important and unique aspects of the system of the invention. Of particular importance in allowing a user friendly home terminal system such as the "enhanced telephone" described in the Weiss et al applications to be employed with a variety of service computers is the concept of providing a network host computer which receives relatively simple requests from the terminal, and responds to these with requests for any additional data required, together with screen commands and the like, such that the home terminal can readily prompt the user to provide whatever additional data is needed. In this way the "intelligence" of the network host is effectively combined with that of the user terminal to generate all information required to access the various service computers. This limits the amount of communication between the user and the service computer to a minimum, which is important in reducing the cost of the service to the consumer.

The use of the network host 8 to update the software comprised by the home terminal page by page also has great significance, in that in this way the home terminal can be provided with many additional capabilities, while remaining a relatively inexpensive and compact unit and retaining the "user-friendly" appearance of the Weiss et al enhanced telephone, which is highly desirable. Furthermore, this capability allows access to further services to be provided in the future without requiring any physical modification of the terminal. The "sliding window" error detection and correction scheme is also highly useful in realizing the objects of the invention.

The use of the standardized message format discussed above, in which varying numbers of individual data elements can be communicated back and forth between the home terminal and the network host, simply by specifying the identification of the element, is also of great utility, inasmuch as this greatly simplifies communication between the terminal and the network host and renders this communication relatively flexible. At the same time, use of the same overall message format for all messages, including both data items such as user identification numbers and software such as downloaded pages, further simplifies the communication scheme provided according to the invention.

Finally, it will be recognized by those of skill in the art that while a preferred embodiment of the invention has been described in detail, this is not to be considered a limitation on the invention, but merely as exemplary thereof. Other modifications and improvements will be envisioned by those of skill in the art. Similarly, those of skill in the art will recognize that the present disclosure is adequate to enable them to practice the method of the invention as claimed; in particular, the implementation of the network host computer for conversion of the data provided by the home terminal into a protocol suitable for accessing a selected service computer is believed to be well within the skill of the art as of the filing of this application.

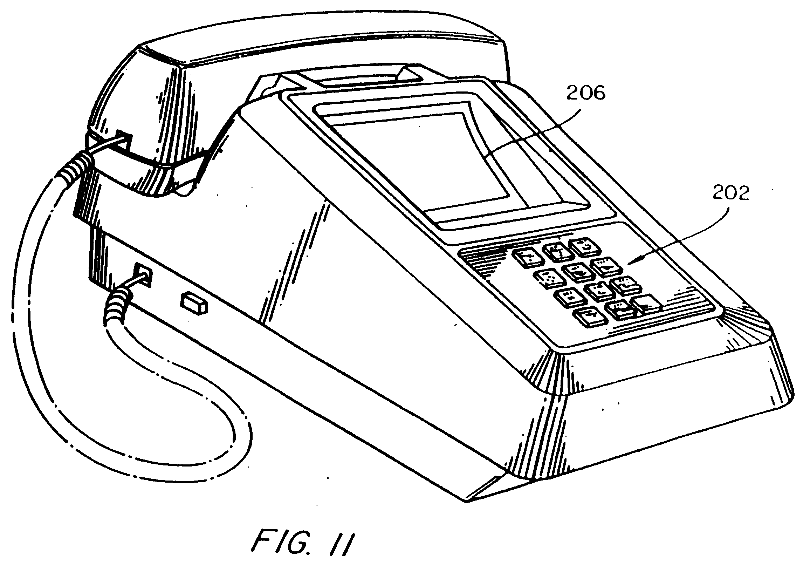

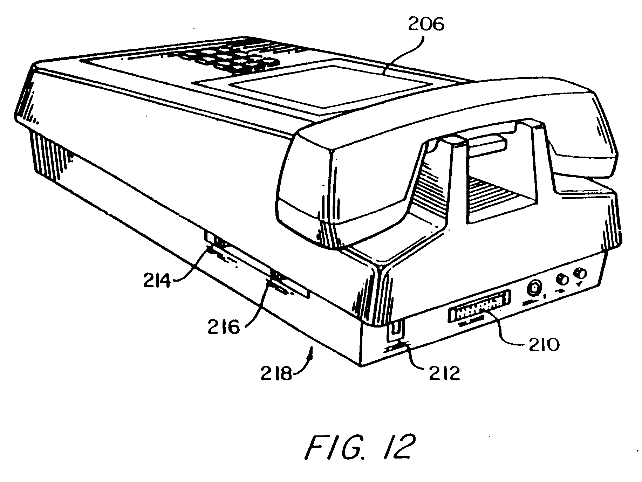

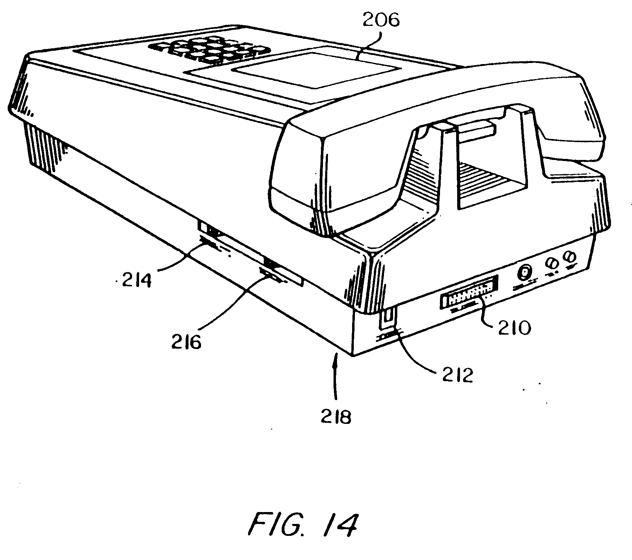

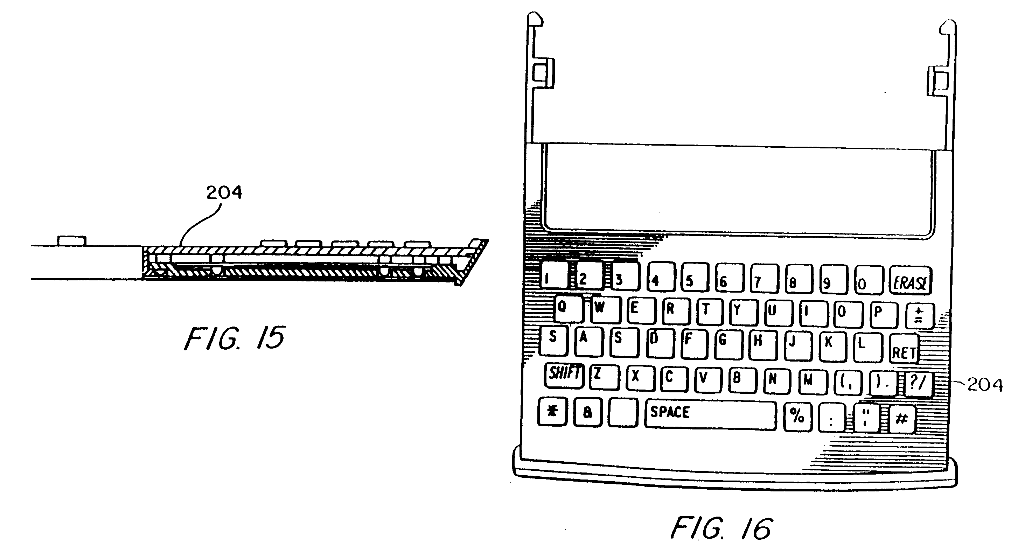

With reference to the drawings, wherein like numerals refer to like parts in the several views, in Figs. 11 and 12, the microprocessor/telephone device of the present invention has the overall appearance of a conventional desktop telephone unit. The present microprocessor/telephone invention is incorporated in a telephone housing so that it presents to a technically unskilled operator a format with which he or she is familiar, i.e. a conventional telephone. The microcomputer device of the present invention may be incorporated in a wall telephone or any other conventional telephone format. The invention is designed to operate both as a standard telephone unit and as a microcomputer in a computer network. The microcomputer of the present invention which is a primary microprocessor and associated memory is designed to have a simplified user interface. The interface is operated through the telephone unit using the 12-key keypad of the telephone. One key of the 12-key keypad is designated a HELLO key and activates the primary microprocessor control of the telephone as explained above. The telephone keypad activates either tone or pulse dialing functions for the electronics of the telephone incorporated in the device and also provides input through a keyboard/keypad microprocessor to the primary microprocessor element of the invention. The primary microprocessor may also receive input through the keyboard/keypad microprocessor from a 52-key keyboard 204, shown in Figures 15, 16 and 17. This board has a QWERTY format and is normally hidden from view. The user interface also includes a 4-inch SONY Watchman white-phosphor cathode-ray tube (CRT) display 206 which receives its input directly from the microprocessor via a multipurpose graphics display controller. Other displays such as a liquid crystal display (LCD) are compatible with the microprocessor and controller and may be used instead of the CRT with some packaging modifications. Referring to Figures 12 and 14, the housing for the invention further includes controls for the display, an accessories port 210 (to support printing or initial speed loading of the RAM), a connection to a telephone line 212 and controls for the telephone speaker 214, ringer 216 and dialer 218, issued for the selection of pulse or tone, and is located on the bottom of the microprocessor/telephone device.

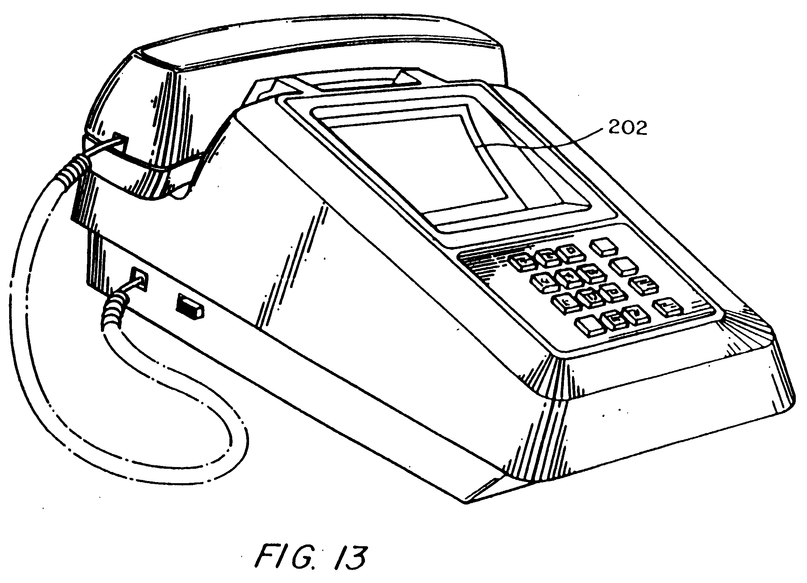

Figures 13 and 14 disclose an alternative embodiment of the invention in which the 12-key keypad is augmented by four function keys. In this alternative, one key is a service key which performs the functions of the HELLO key in the preferred embodiment. The other function keys are programmable and may perform the standard functions of speed dial, flash or redial.

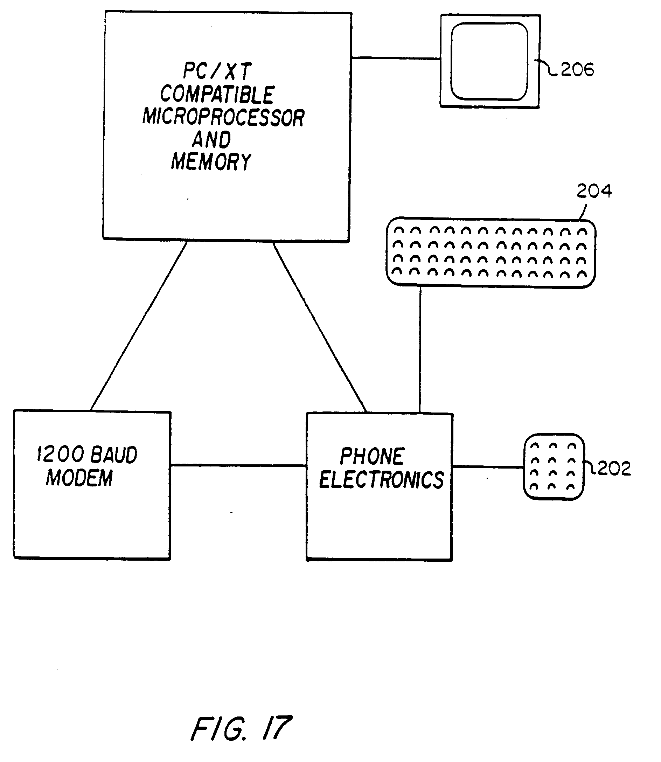

Figure 17 depicts the basic structure of the hardware of the microprocessor/telephone unit. As stated above, the device of the invention includes three basic elements (1) telephone electronics, (2) a primary microprocessor with memory and (3) a modem. The telephone electronics provides input to the primary microprocessor of the invention and also acts as a telephone. The primary microprocessor itself includes an 8086 compatible central processing unit and is compatible with the standard International Business Machine (IBM) PC/XT at the BIOS level. The microprocessor includes six-memory units, a volatile writable 512K byte RAM memory, a non-volatile writable 192K byte RAM memory with battery backup, a 256K byte non-volatile non-writable ROM memory, an 8K byte character generator ROM memory and a 16K byte display memory for interface with the 4-inch SONY Watchman white-phosphor CRT display. The display is controlled by a multipurpose graphics display controller which can provide black and white or color CRT or drive an LCD display panel. The primary microprocessor memory may include a 32K byte electrically erasable programmable read-only memory (EEPROM) or a static RAM memory with ten-year built-in battery protection for recording user information such as telephone numbers and addresses.

The primary microprocessor is a general purpose computer and may be programmed in any standard manner. The primary microprocessor can be programmed to include certain fixed functions as will be explained in detail below. One application program usable on the primary microprocessor is implemented using a software language designated Home Access Language (HAL). The application program is formatted in logic pages. A page includes screens to be displayed on the CRT and logic associated with specific operations described on the screens. The application program written in HAL is compiled into pseudo-code on a mainframe computer and is translated into an executable format by a HAL interpreter incorporated in the 256K byte ROM. The application program, when incorporated in the primary microprocessor, permits it to receive input from the keyboard microprocessor and the modem and to perform certain programmed functions as explained below. The primary microprocessor is connected to a 1200 Baud or higher rate modem. The modem is also connected to the telephone line and provides an interface between the microprocessor and other elements of the computer network in which the microprocessor is used.

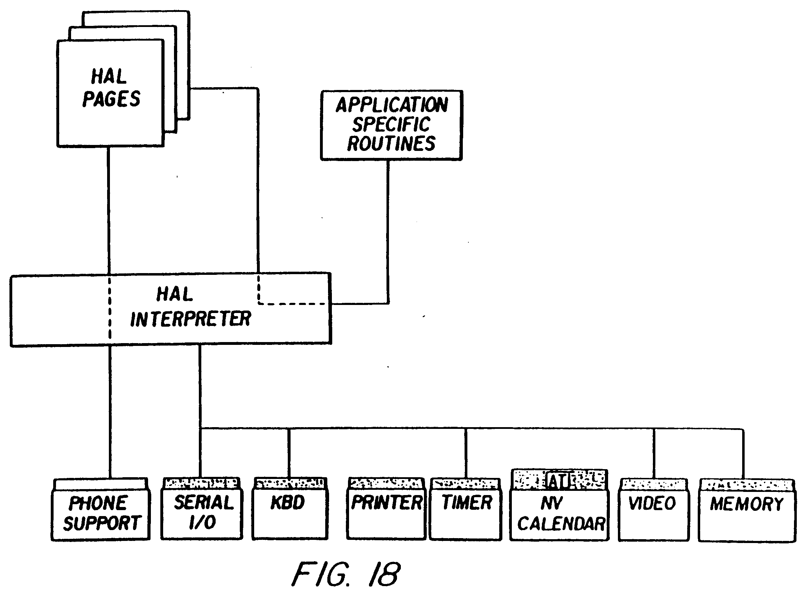

Figure 18 sets forth an overview of certain software functions when the primary microprocessor is programmed in the HAL format. The primary microprocessor receives certain standard software applications after compilation into the HAL pseudo-code. These applications are interpreted by a HAL interpreter located in the 256K ROM. The initial HAL application pages, certain specific routines, customer data and/or configuration data are written into the battery-backed memory so that they are protected against power failure. In the alternative, all such data except customer data may be placed in the ROM.

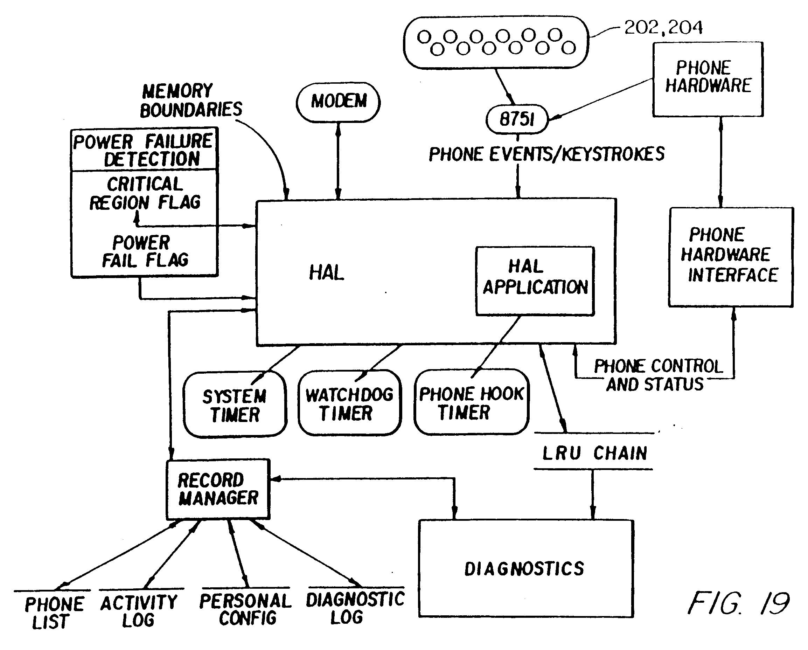

Figure 19 depicts the microprocessor's software interface with the telephone as provided by the HAL applications. These functions include control and status reporting of the telephone electronics, control of the telephone off-hook timer, control of a watchdog timer and system timer. These functions will be explained in greater detail below. The applications also provide input to microprocessor diagnostics and create a power-on self test for the microprocessor. In one embodiment of the invention, the program invokes a record manager which manages a telephone list data record, activity logs, a personal configuration module and diagnostic log. Certain elements of these records are maintained in the writable battery-backed memory to provide protection against power failure.

The program interacts with the primary microprocessor circuitry to provide a power failure protection feature. Power to the primary microprocessor below a predetermined level is detected by the microprocessor circuitry and provides an interrupt to the microprocessor. The so-called "power fail" interrupt causes the microprocessor to reset and to condition itself for possible failure. The telephone electronics is also disconnected from the microprocessor so that the telephone may continue operation without the microprocessor, using telephone line power. The primary microprocessor programs define certain microprocessor configuration parameters including the boundaries of the memory for the application pages as well as the data memory areas. The system software also provides that data pages may be written in the volatile memory. When the memory is filled and the primary microprocessor needs an additional page, the primary microprocessor transfers the new page from a network data bank and overwrites the pages which are least recently used. These overwritten pages may be retrieved from the network memory through the modem, if required again.

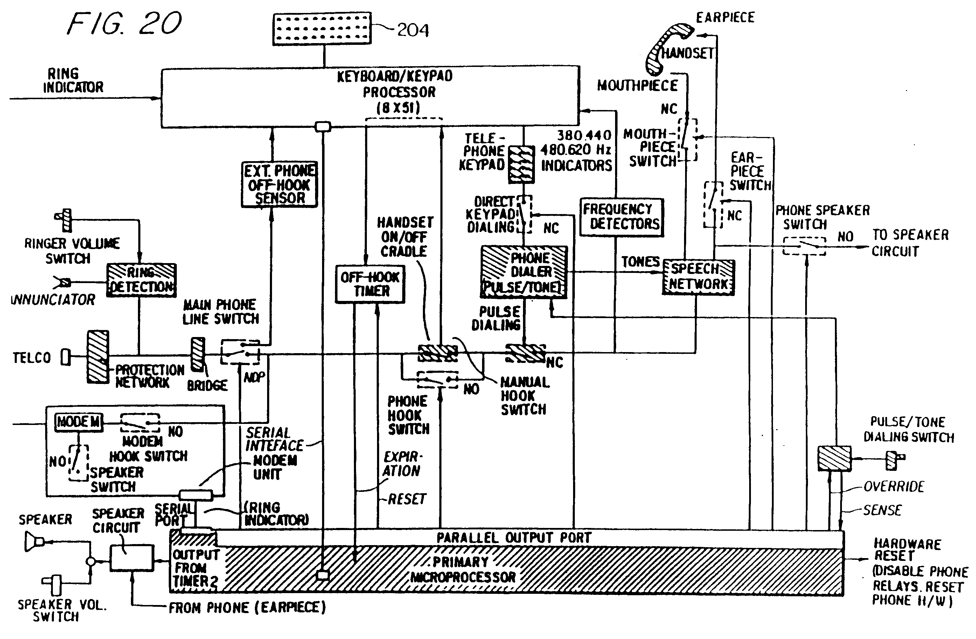

Figure 20 is a block diagram of the telephone electronics of the invention. Shaded areas indicate components which are powered by the phone line and are thus operational without AC power. Switches, which are outlined by dotted lines in Fig. 20 are assigned to the designations "NC" it normally closed, "NO" if normally open or "NDP" if normally in down position. The telephone electronics includes a standard telephone 12-key keypad which provides input to a keyboard/keypad processor and to a telephone dialer. The telephone dialer provides a pulse or tone dialing output to the telephone line. The dialer itself may be selected for either pulse or tone by a switch on the telephone housing or by the software. The telephone dialer may be disconnected from the main telephone line by the primary microprocessor. The direct keypad dialing switch allows the primary microprocessor to remove power from the dialer so that the keypad only provides input to the primary microprocessor. A phone hook switch may be controlled from the primary microprocessor to connect the dialer to the telephone line without raising the handset. A main telephone switch also controlled from the primary microprocessor connects the output of the telephone dialer to the outside telephone line. The direct keypad, dialer telephone hook, and main telephone switch are all controllable from the microprocessor to permit the telephone dialer to provide pulse or tone outputs or deactivate these outputs.

The telephone electronics also includes an off-book timer activated by the lifting of the handset. The off-hook timer is set to expire at the end of a period designated off-hook timer expiration (OHTE). The telephone will go into a manual mode unless the timer is reset by the microprocessor within the OHTE period. The manual mode is activated through the telephone relay disable which is activated by outputs from the off-hook timer and the primary microprocessor. The telephone electronics includes a keyboard/keypad processor which provides an interface between the 52-key keyboard and 12-key keypad and the primary microprocessor. The alternative embodiment disclosed in Figures 13 and 14 uses one or more function keys. In the alternative embodiment, function key input is also provided through the keyboard/keypad processor. The interface circuitry and the primary microprocessor will support up to eight function keys. The keyboard/keypad processor also includes the invention's tone detection circuitry. The tone detection elements sense (1) busy/fast busy, (2) call-waiting, (3) ringing or (4) dial tone and provide these detections as an input to the primary microprocessor through the keyboard/keypad processor. The ring and dial tones are also provided through the speech network to the telephone handset. The primary microprocessor provides a serial input to the modem which can be connected by control from the microprocessor to the main telephone line.

The primary microprocessor and the keyboard/keypad processor have an established joint protocol requiring the primary microprocessor to have input from the keyboard/keypad processor every five seconds. If such input is not received, both processors will be reinitialized.

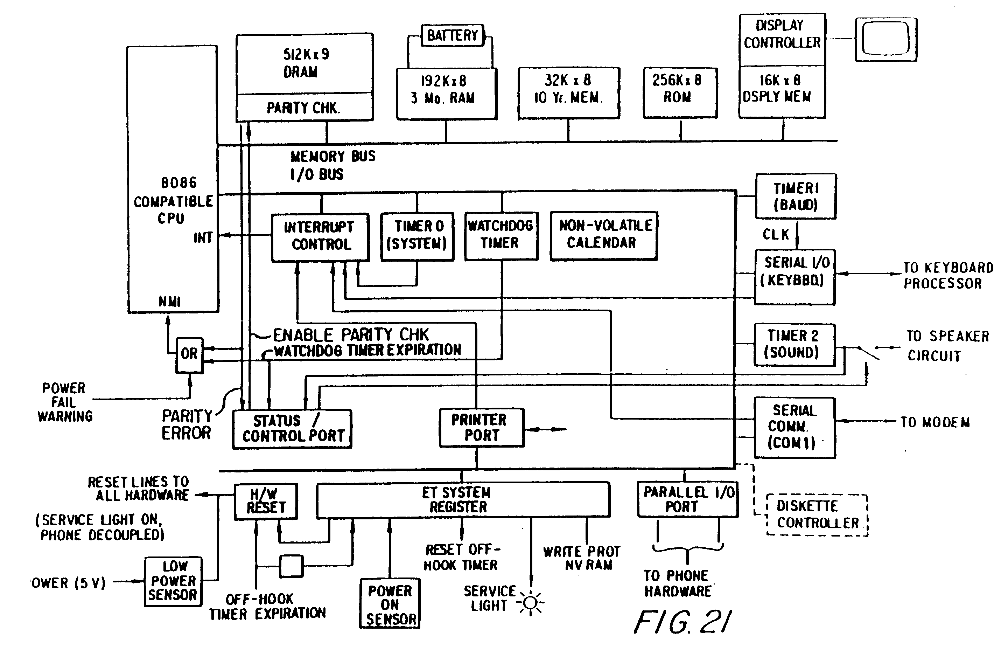

Referring to Figures 19 and 21, the circuitry for the microprocessor includes a number of integrity features which assist in providing a good interface with the telephone operation of the device. The microprocessor includes a watchdog timer which is reset through the microprocessor's Input/Output bus. If, in the period designated watchdog timer expiration (WDTE), the watchdog timer is not reset by the primary microprocessor, a nonmaskable interrupt (NMI) is generated as an input to the microprocessor. If the timer is allowed to expire a second time, a hardware reset is generated which disables the timer and reboots the microprocessor. The telephone hardware then decouples the telephone from the microprocessor and activates a service light on the housing unit. The Central Processing Unit (CPU) of the microprocessor has both a memory bus and an input/output bus. The volatile writable 512K byte RAM memory includes a parity check enabled through a status control port providing a parity error check for the device. The parity error detector provides the same type of NMI and failure protection as the watchdog timer. The microprocessor circuitry detects a critical region of power loss and inputs that detection to the microprocessor. The microprocessor program responds to these inputs in the manner explained above.

The 12-key telephone keypad includes a novel split pill output element which provides two separate output signals. One output is directed to the keyboard/keypad processor and the other to the telephone dialer. The dual output is always provided. The telephone dialer function is deactivated through the direct keypad dialing switch if the processor determines that the output at the keypad should only be directed to the microprocessor and is not a part of the device's normal telephone dialing features.

The microprocessor of this invention may be operated as a normal microprocessor device which receives program input through the QWERTY keyboard and the keypad or through a modem. The volatile writable memory of the microprocessor may receive the application programs which may be processed through an application interpreter which is included as a portion of the non-volatile non-writable ROM memory. The microprocessor has a number of predetermined telephone interface features. However, the device includes significant writable memory which can receive input either from the keyboard or through the modem. Once the device has loaded its application memory, it may be operated in most modes using the 12-key telephone keypad. In the alternative embodiment, the device can be operated in most models through a service function key and the 12-key keypad.

In the preferred embodiment, one key of the 12-key keypad is a HELLO button which initiates a menu on the CRT display and provides a guide to the user for subsequent manipulation of the microprocessor. In the alternative embodiment, a service function key performs this function. In either environment, the device presents a user friendly appearance since it has the general appearance and configuration of a standard telephone familiar to most non technical persons. The device requires no sophisticated knowledge of computer programming or computer operation. The user merely responds to direct guidance from the menu and subsequent pages of instructions which appear on the screen of the CRT.

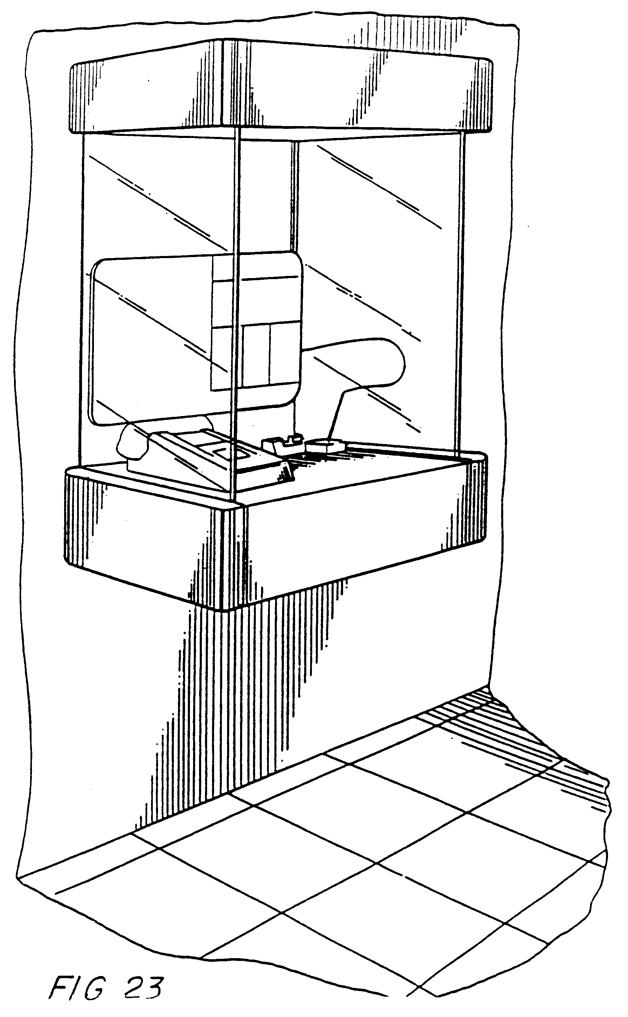

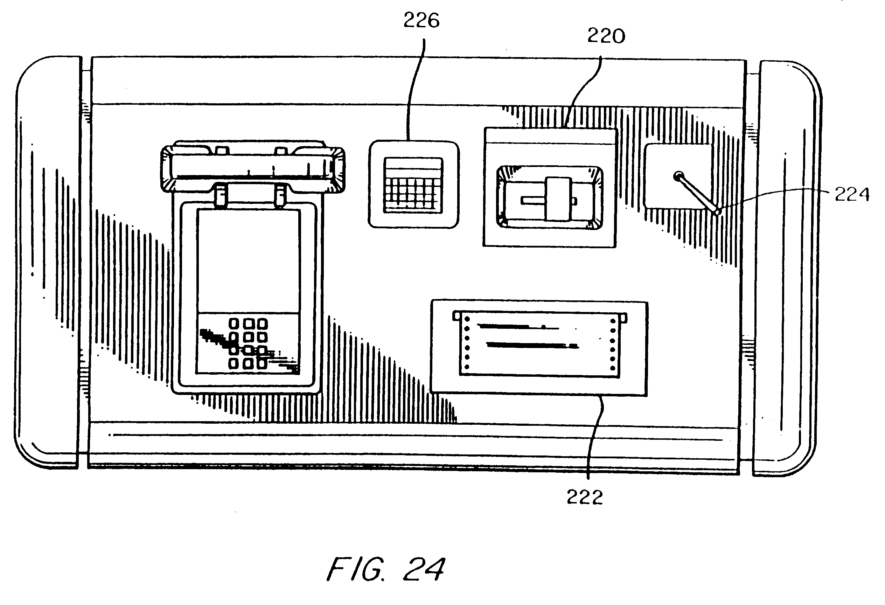

The device may be operated at a public booth as shown in Figure 23 and 24. In this configuration, the apparatus of the invention is placed in a form fitted hole in a counter top with only the upper housing visible. The device is deployed with several peripheral items in close proximity in a user-friendly arrangement. The peripheral items which are connected to the apparatus of the invention as shown in Figure 24, include a card reader 220 for reading magnetic information imprinted on cards, a printer 222 capable of printing transaction journals, a pen 224 and a calculator 226. Other items connected to the apparatus in this configuration, but which are not user-visible, are (1) an attachment called an expansion box for converting signals coming out of the connector on the back of the apparatus, allowing for card reader and printer connection, (2) two floppy disc drives for expanded software and (3) an external power supply to drive the card reader and disc drives.

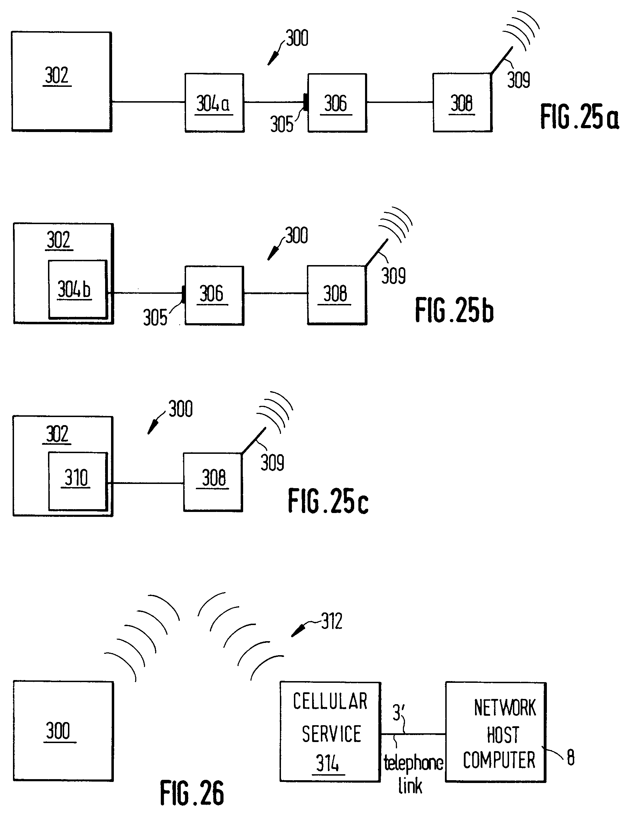

Referring to FIG. 25a, a remote terminal system 300 includes a terminal 302 that represents either a telephone-type terminal such as the terminal 2 shown in FIG. 1 or a conventional home computer such as the terminal 10 also shown in FIG. 1. A conventional external modem 304a is connected to the terminal 302 via any one of a variety of commonly available and commonly known types of connections for electrically attaching a terminal to an external modem, such as an RS-232 connection.

The modem 304 is connected to an interface box 306 via a standard telephone connection 305, such as an RJ-11 telephone connection. The connection 305 provides and accepts telephone signals similar to those provided and accepted by conventional wired telephone service. Therefore, the modem 304a interacts with the interface box 306 in the same manner that the modem 304a would interact with a conventional wired telephone service connection. The interface box 306 "looks" like conventional wired telephone service to the modem 304a.

The interface box 306 is also connected to a cellular telephone 308 having an antenna 309. The antenna 309 transmits and receives cellular telephone signals over any one of a variety of commonly known and commercially available cellular telephone communication channels. Outgoing data signals flow from the terminal 302 to the modem 304a to the interface box 306 to the cellular telephone 308 for transmission via the antenna 309. Similarly, incoming data signals are received by the antenna 309 and flow from the cellular telephone 308 to the interface box 306 to the modem 304 and to the terminal 302. The interface box 306 can be any one of a number of commercially available devices designed for the purposes described herein, such as the THE portable cellular connection manufactured by Motorola Inc. Similarly, the cellular telephone 308 can be any one a variety of commercially available data compatible cellular telephones, such as the portable cellular telephones manufactured by Motorola Inc.

Referring to FIG. 25b, the terminal 302 is shown with an internal modem 304b. In this configuration, the system 300 operates in a nearly identical manner as that described above in connection with FIG. 25a. Since the modem 304b is internal to the terminal 302, there is no external connection between the terminal 302 and the modem 304b. Just as with FIG. 25a, the modem 304b connects to the interface box 306 via the connection 305 and the interface box 306 is connected to the cellular telephone 308.

Referring to FIG. 25c, it is possible to eliminate the need for the interface box 306 shown in FIG.'s 25a and 25b by using a modem 310 that transmits and receives signals directly to and from the cellular telephone 308. The modem 310 can be any one of a variety of commonly known and commercially available modems that can communicate directly with cellular telephones, such as the SpeedPAQ 144 Modem manufactured by the Compaq Corporation. The modem 310 provides all of the functionality of the combination of the interface box 306 and the modem 304a shown in FIG. 25a or the combination of the interface box 306 and the modem 304b shown in FIG. 25b. Therefore, the signals being exchanged between the modem 310 and the cellular telephone 308 are analogous to the signals exchanged between the interface box 306 and the cellular telephone 308.

Referring to FIG. 26, the remote terminal system 300 is shown in communication with the host computer 8 over a cellular telephone communication channel 312. The cellular telephone communication channel 312 can be any one of a variety of commonly known and commercially available cellular telephone communication channels. Different regions are serviced by different cellular communication channel providers. A cellular service 314 represents one or more of the commercial cellular communication channel providers.

The cellular service 314 is connected to the host computer 8 via a telephone link 3'. The telephone link 3' is provided by the cellular service 314 and represents the interface between the cellular telephone communication channel 312 and the standard wired telephone system. That is, a call can be placed on the cellular communication channel 312 from a cellular telephone to a telephone connected to the wired telephone system because the cellular service 314 interfaces the two systems.

The remote terminal system 300 communicates with the host computer 8 over the cellular telephone communication channel 312. However, the host computer 8 sends and receives signals in the same manner as described above in connection with FIG.'s 1-25 and does not require any special communications equipment to communicate to the remote terminal system 300 since that is taken care of by the cellular service 314.

The host computer 8 does not and can not differentiate between exchanging data with remote terminals connected via standard wired telephone service and exchanging data via the cellular communication channel 312. Therefore, all of the terminal functionality and configurations described with reference to FIG.'s 1-25 are available to the remote terminal system 300 over the cellular telephone communications channel 312.

It will be appreciated by those of skill in the art that while one embodiment of the invention had been disclosed, further modifications and improvements could be made thereto without departure from the spirit and scope of the present invention. Therefore, the invention is not to be limited by the above exemplary disclosure, but only by the following claims.

## Claims

1. A system for conducting financial transactions using an ATM network of the type connected to at least one financial institution, said financial institution maintaining an account for a specific user, said system comprising:
a central computer;
at least one remote data terminal including user input means and an alpha-numeric display, said data terminal coupled to a cellular telephone communication channel said remote data terminal including means for generating first data representing a payee, second data representing an amount, and third data representing an ATM network compatible personal identification number;
telecommunication means including a modem operatively coupled to said remote data terminal, said telecommunications means for communicating said first, second and third data from said remote data terminal to said central computer via said dial-up telephone line,
said central computer further including means for generating a digital message responsive to said communicated first, second ad third data and for applying said digital message including said ATM network compatible personal identification number to said ATM network so as to selectively effect debiting of said user account substantially in real-time response to user manipulation of said remote terminal input keys.

2. A system as in claim 1 wherein said terminal comprises:
an alpha-numeric display device capable of displaying a maximum of N lines of text, N being an integer; and
a plurality of keys manipulable by the user, for selecting one of said N display lines.

3. A system as in claim 2 wherein:
said central computer connects to said cellular telephone communication channel via a packet data network that frames messages in packets of predetermined length; and
said central computer includes means for generating display data specifying the display content of all of said N lines of said display.

4. A system as in claim 1 wherein:
said central computer connects to said cellular telephone communication channel via a packet data network;
said packet data network frames messages carried thereby into packets; and
said central computer includes means for specifying substantially all of said characters displayed by said terminal display.

5. A system as in claim 1 wherein said terminal includes encryption means for encrypting at least said third data.

6. A system am in claim 1 wherein said central computer comprises means for generating a data packet comprising digital data representing display and prompt information and means for transmitting said generated packet to said terminal via said cellular telephone communication channel.

7. A system as in claim 1 wherein:
said terminal further includes a help key and a cancel key;
said central computer includes means for providing help information for display on said terminal display in response to user depression of said help key; and
said central computer ignores the last keystroke provided by said user in response to depression of said cancel key.

8. A system as in claim 1 wherein said terminal further includes alpha-numeric keypad means for facilitating input by said user of said second data.

9. A system as in claim 1 wherein said terminal further includes screen navigation keys for requesting recall of information previously displayed by said terminal.

10. A system as in claim 1 wherein said terminal includes encrypting means for encrypting said personal identification number.

11. A system as in claim 1 wherein said remote data terminal comprises a home terminal for connecting to said cellular telephone communication channel, said terminal providing voice and data communications capabilities, said terminal comprising:
a housing;
a digital controller disposed within said housing;
said user input means, coupled to said digital controller, for inputting said personal identification number;
encrypting means coupled to said digital controller and disposed within said housing for encrypting said inputted personal identification number to provide ATM network compatible encrypted personal identification data;
wherein said alpha-numeric display is electrically coupled to said digital controller and disposed on said housing, and said display panel is capable of simultaneously displaying a plurality N of discrete lines of information;
a plurality of user-manipulable controls, coupled to said controller and disposed on said housing, said controls for selection of menu options displayed on said display information lines;
a telephone handset for permitting voice communications over said cellular telephone communication channel and
wherein said modem is disposed within said housing and coupled to said controller, and said modem is adapted to communicate data between said controller and said central computer via said cellular telephone communication channel,
said modem for transmitting said ATM network compatible encrypted personal identification data from said terminal to said central computer via said cellular telephone communication channel, and for communicating information bidirectionally with said central computer in a packet data network format to efficiently provide a high degree of on line interactivity between (a) said central computer, and (b) a user viewing said display and operating said controls.

12. A system as in claim 11 wherein said system includes means for periodically transmitting a random number over said cellular telephone communication channel.

13. A system as in claim 11 further including a power supply means, said power supply means for providing power to at least said controller.

14. A system as in claim 11 wherein said controller includes memory buffer means for receiving and temporarily storing signals representing user input and for supplying said stored signals to said modem for transmission over said cellular telephone communication channel.

15. A system as in claim 11 wherein said terminal further includes navigational keys for requesting display of previous and subsequent screens in a predetermined sequence of screens.

16. A system as in claim 11 further including means for interfacing with a non-volatile memory element so as to permit credits to be downloaded to said terminal and stored by said memory element.

17. A method of distributing financial services remotely, comprising the following steps:
providing a plurality of remote home banking terminals to a corresponding plurality of users;
receiving bill paying requests including user-supplied ATM network compatible personal identification information from said plurality of terminals over cellular telephone communication channels; and
processing said bill paying requests substantially in real-time at a central computer operatively coupled to said cellular telephone communication channels, said processing step including the following steps:
generating POS or other ATM interchange-compatible debit messages including said ATM network compatible personal identification information responsive to information transmitted by users from said remote home banking terminals to said central computer over said cellular telephone communication channels;
transmitting said debit messages over an ATM network substantially in real-time response to said user bill paying requests;
debiting said users' bank accounts substantially in real-time in response to said debit message; and
paying entities selected by said users via said remote home banking terminals with funds obtained by debiting the users' bank accounts.

18. A method as in claim 17 wherein said bill paying requests receiving step includes the step of receiving a user-inputted personal identification number that is encrypted.

19. A method of paying bills comprising the following steps:
activating a microprocessor-based home banking terminal coupled to a cellular telephone communication channel;
causing and controlling said home banking terminal to establish communications with a central computer over said cellular telephone communication channel;
inputting a PIN user identification number;
manipulating said terminal to select a payee;
manipulating said terminal to select an amount to pay said payee;
encrypting said PIN user identification number at said home banking terminal to provide an ATM network compatible encrypted PIN user identification number;
transmitting data representing said ATM network compatible encrypted PIN user identification number and said amount from said home banking terminal to said central computer;
generating, substantially in real-time at said central computer in response to said transmitted data, an ATM network transaction debit message encoding at least said ATM network compatible encrypted PIN and said amount;
transmitting said ATM network transaction debit message from said central computer to said user's bank substantially in real-time over an ATM network;
validating and processing said ATM network transaction debit message substantially in real-time;
controlling, with said central computer, a means for paying said selected payee said selected amount; and
transferring funds in the amount specified by said ATM network transaction debit message from said user's bank to the operator associated with said central computer.

20. A method as in claim 19 wherein said home banking terminal includes an alphanumeric multiline display, and
said manipulating steps each include the step of prompting for inputs by displaying information on said alphanumeric multiline display.

21. A method as in claim 19 wherein said home banking terminal includes plural user-depressible controls, and
said inputting step comprises the step of inputting said PIN user identification number by depressing said controls.

22. A method as in claim 19 wherein said encrypting step includes encrypting said PIN user identification number.

23. A method of providing home banking services comprising the following steps:
communicating, via one or more cellular telephone communication channels, with said home banking terminals on demand using a central computer;
receiving financial service requests from said home banking terminals via said cellular telephone communication channels, said receiving step including receiving at least an ATM network compatible encrypted user PIN, an amount, and a payee selection;
processing said received financial service requests with said central computer, including the steps of:
generating and communicating messages from said central computer to users' banks over an ATM network resulting in debiting of user's bank accounts electronically substantially in real-time response to receipt of user bill paying requests,
including the step of generating a digital ATM network transaction message containing at least said ATM network compatible encrypted user PIN and said amount and applying said message to said ATM network;
disbursing payments electronically with said central computer to payees selected by said users.

24. A method as in claim 23 wherein:
said method further includes the step of separately communicating said payee selection to said users' banks.

25. A method as in claim 23 wherein said disbursing step comprises the step of electronically disbursing said payments by communicating data across a network of electronic lockboxes.

26. A method as in claim 23 further including encrypting user PIN data within said home banking terminals.

27. A method of distributing financial services remotely, comprising the following steps:
providing home banking terminals to users;
communicating, via cellular telephone communication channels, with said home banking terminals on demand using a central computer;
receiving via said cellular telephone communication channels financial service requests including encrypted PIN information with said central computer from said home banking terminals;
processing said received financial service requests with said central computer substantially in real-time including generating an ATM debit request substantially in real-time response to receipt of said financial service requests.

28. A method of paying bills comprising the following steps:
activating a microprocessor-based home banking terminal coupled to a cellular telephone communication channel;
causing and controlling said home banking terminal to establish communications with a central computer over said cellular telephone communication channel;
inputting a PIN user identification number;
manipulating said terminal to select a payee;
manipulating said terminal to select an amount to pay said payee;
encrypting said PIN within said home banking terminal to provide an ATM network compatible encrypted PIN;
transmitting data representing said ATM network compatible encrypted PIN user identification number, said selected payee, and said amount from said home banking terminal to said central computer via said cellular telephone communication channel;
storing a plurality of recurring payment dates;
parsing said stored payment dates and determining which of said stored payment dates, if any, correspond to the current date;
if stored payment data corresponds to the current date, generating, substantially in real-time at said central computer in response to said stored data, an ATM debit message specifying at least said ATM network compatible encrypted PIN, said bank account selection, and said amount; and
transmitting said ATM network transaction debit message from said central computer to said user's bank substantially in real-time over a standard ATM network to effect a real-time debit of said user's bank account.

29. A method of delivering at least one electronic service to multiple users at least in part via cellular telephone communication channels and home terminals, said method including the following steps:
(b) receiving, from a home terminal over said cellular telephone communication channels, an electronic service request and ATM network compatible personal identification information associated with a user;
(c) generating an ATM network debit request message encoding said received ATM network compatible personal identification information;
(d) applying said ATM debit request message including said ATM network compatible personal identification information to an ATM network to effect a real-time debiting of funds from an account associated with said user substantially in real-time response to receipt of said electronic service request from said user;
(f) repeating said steps (b)-(d) for multiple users.

30. A method as in claim 29 further including the step of providing extensive bidirectional interaction between said home terminal and a remote computer substantially in real-time via said cellular telephone communication channels so as to provide real-time online interactivity with said user.

31. A method as in claim 30 wherein said receiving step (b) includes receiving a request for home banking services from said user.

32. A method as in claim 30 wherein said receiving step (b) includes receiving a request for electronic bill payment from said user.

33. A method as in claim 29 wherein said receiving step (b) includes receiving a request for home banking services from said user.

34. A method as in claim 29 wherein said receiving step (b) includes receiving a request for electronic bill payment from said user.

35. A method as in claim 29 wherein:
said method further includes supplying, to each of said multiple users, said home terminal having a display.

36. A method as in claim 29 further including the steps of encrypting said personal identification number, and transmitting said encrypted personal identification number over said cellular telephone communication channels for receipt by a remote computer in said receiving step (b).

37. A telephone with a remotely programmable memory and computing ability and having a simplified user interface, comprising:
a microcomputer device having a remotely programmable logic device defining interconnections among the components of the microprocessor device and associated memory, said microcomputer device being responsive to inputs from a standard telephone keypad and instructions maintained in said memory to perform computing and control functions; and
means for interfacing said telephone with a cellular communications channel,
said telephone incorporating electronics for the operation of telephone service, and
said microprocessor device also being responsive to inputs provided from said telephone electronics and providing control of said telephone electronics, and said memory incorporating both volatile and non-volatile elements so that said microprocessor device and said memory may be programmed as a general purpose computer.

38. A telephone as claimed in claim 37, further comprising:
a lapse timer which resets by output from said microprocessor device,
said lapse timer providing an interrupt to said microprocessor device unless reset by said microprocessor device within the predetermined time, and said microprocessor device being rebooted and said lapse timer being disabled unless reset within a second predetermined time interval.

39. A telephone as claimed in claim 37, further comprising:
detector means for detecting an off-hook condition on the handset of the telephone; and
an off-hook timer responsive to said off-hook detector means and said microprocessor device to reboot said microprocessor device if said off-hook timer is not reset by said microprocessor device within a predetermined time interval.

40. A telephone as claimed in claim 37, further comprising:
a parity check device checking at least a part of said memory; and
logic means responsive to said parity check device, for providing an interrupt to said microprocessor device when said parity check device provides an error detection.

41. A telephone as claimed in claim 37, wherein said keypad provides simultaneous outputs to a telephone dialer and to said microprocessor device through a dial output device.

42. A telephone as claimed in claim 37, wherein
said memory includes a removable memory element configured for permanent data storage even when removed from said microprocessor device.

43. A combination computer and telephone, comprising:
a housing configured as a conventional telephone and having a front panel consisting essentially of a telephone keypad and a display;
telephone electronics responsive to said telephone keypad and including a telephone dialer within said housing for performing conventional telephone functions;
a cellular telephone communications channel interface for interfacing said telephone electronics to a cellular telephone communications channel; and
a microprocessor within said housing and including associated memory, said microprocessor being responsive to inputs from said conventional telephone keypad and to instructions contained in said memory for performing computing and control functions so as to interact over a telephone line with a host computer to transfer information between data bases on or accessible through the host computer and the combination computer and telephone.

44. The combination computer and telephone claimed in claim 43, further comprising means external to the combination computer and telephone for programming said memory.

45. A combination computer and telephone, comprising:
a housing configured as a telephone, and having a front panel consisting essentially of a display device and a telephone keypad operating a dual output device;
a microprocessor device in the housing connected for receiving input from the dual output device;
a telephone in the housing connected for receiving input from said dual output device;
a memory for receiving input from said microprocessor device;
a telephone dialer receiving input from said memory;
switch means for selecting the telephone electronics when there is a power failure to said microprocessor device;
a modem connected to said telephone dialer and memory; and
an interface connected to said modem and to a cellular telephone communications channel, for interfacing said modem with said communications channel.

46. A combination computer and telephone as claimed in claim 45, further comprising instructions resident in said memory for controlling said microprocessor.

47. A combination computer and telephone as claimed in claim 45, wherein said associated memory includes a removable memory.

48. A combination computer and telephone as claimed in claim 45, further comprising:
a lapse timer reset by output from said microprocessor device,
said lapse timer providing an interrupt to said microprocessor device unless reset by said microprocessor device within a first predetermined time interval, said microprocessor device being rebooted and removing power from said telephone electronics, and said lapse timer being disabled unless said lapse timer is reset within a second predetermined time interval.

49. A combination computer and telephone as claimed in claim 52, further comprising:
a telephone handset mounted on said housing;
an off-hook detector means for detecting an off-hook condition of said telephone handset;
off-hook timer device responsive to said off-hook detector means and said microprocessor device to reboot said microprocessor device and remove power from said telephone electronics unless said off-hook timer device is not reset by said microprocessor device within a third predetermined time interval.

50. A combination computer and telephone as claimed in claim 45, further comprising a parity check device for at least a part of the associated memory of the microprocessor device, and logic means responsive to said parity check means, for providing an interrupt to said microprocessor device when said parity check device provides an error detection.

51. A telephone as claimed in claim 37, further comprising a second keyboard.

52. A telephone as claimed in claim 37, further comprising a second hidden keyboard.

53. A combination computer and telephone as claimed in claim 43, further comprising a second keyboard.

54. A combination computer and telephone as claimed in claim 45, further comprising a second keyboard.

55. A telephone as claimed in claim 37, wherein said keypad is a touch screen input device.
